# EUROPÄISCHE PATENTSCHRIFT

(11) **EP 0 807 749 B1**
(45) Veröffentlichungstag und Bekanntmachung des Hinweises auf die Patenterteilung: **08.10.2003**
(21) Anmeldenummer: 97810288.7
(22) Anmeldetag: 07.05.1997
(51) Int. Cl.: F01N 7/18, F01N 1/24, F01N 3/28

(54) **Abgasanlage für ein Kraftfahrzeug sowie Kraftfahrzeug**
Exhaust system for a motor vehicle as well as motor vehicle
Dispositif d'échappement pour un véhicule automobile, ainsi que véhicule automobile

(30) Priorität: 13.05.1996 CH 122396
(43) Veröffentlichungstag der Anmeldung: 19.11.1997
(73) Patentinhaber: SCAMBIA INDUSTRIAL DEVELOPMENTS AKTIENGESELLSCHAFT, 9494 Schaan (LI)
(72) Erfinder: Alexnat, John W. Jörg, 3724 Vliermaal (BE); Steenackers, Pieter Delfina, Dr., 3030 Heverlee (BE)
(74) Vertreter: Eder, Carl E.

(56) Entgegenhaltungen:
- EP-A- 0 211 454
- EP-A- 0 297 861
- EP-A- 0 429 061
- EP-A- 0 485 734
- DE-A- 3 137 746
- DE-A- 3 724 087
- DE-A- 4 423 939
- DE-U- 8 716 385
- US-A- 2 081 546
- US-A- 4 349 078
- US-A- 5 323 608
- US-A- 5 323 989
- US-A- 5 331 810
- PATENT ABSTRACTS OF JAPAN vol. 008, no. 166 (M-314), 2.August 1984 & JP 59 063314 A (ASAHI KIKI KK), 11.April 1984,

## Beschreibung

Die Erfindung betrifft eine Abgasanlage für ein einen Fahrzeugkörper und einen Verbrennungsmotor aufweisendes Kraftfahrzeug, mit einem mit dem Verbrennungsmotor verbindbaren Auspuff, der mindestens ein deformierbares Leitungselement, mindestens ein stromabwärts von diesem angeordnetes Rohr und mindestens einen stromabwärts des genannten Leitungselements angeordneten Schalldämpfer aufweist, und mit Haltemitteln zum Halten des Auspuffs am Fahrzeugkörper.

Die Abgasanlage ist zum Beispiel für einen Personenkraftwagen vorgesehen, dessen Fahrzeugkörper ein Gestell und einen Fahrzeugboden aufweist. Die Abgasanlage kann jedoch eventuell auch für ein anderes Kraftfahrzeug - zum Beispiel einen Lastkraftwagen oder Bus - verwendet werden. Der Verbrennungsmotor kann dabei aus einem Benzin- oder Dieselmotor bestehen.

Bei der Verwendung eines Kraftfahrzeugs werden vom Verbrennungsmotor Vibrationen, d.h. Schwingungen, des Motorgehäuses erzeugt und über die mechanische Verbindung von diesem mit dem Auspuff auf den letzteren übertragen. Ferner führt der Motor dem Auspuff pulsierend Abgas zu, das auch Schwingungen des Auspuffs anregen kann. Im Auspuff können dabei Schwingungen mit verschiedenen Schwingungsmodi entstehen. Die Schwingungen des Auspuffs verursachen zeitlich periodisch und relativ schnell ändernde Beschleunigungen der schwingenden Teile des Auspuffs. Ferner verursachen das Fahren über Löcher und sonstige Unebenheiten, das Fahren von Kurven sowie das Beschleunigen und Bremsen des Fahrzeugs Beschleunigungen des Auspuffs. Diese durch das Fahren verursachte Beschleunigungen ändern normalerweise wesentlich langsamer als die durch die Schwingungen verursachten Beschleunigungen. Der Auspuff wird zudem beim Betrieb des Motors durch das Abgas erhitzt, wobei die Abgastemperatur vom Motor weg entlang dem Strömungsweg abnimmt. Die Erhitzung bewirkt infolge der thermischen Dehnung der starren Teile des Auspuffs eine vorübergehende Verlängerung von diesem. Bei bekannten Personenkraftwagen betragen die Längen der Auspuffe zum Beispiel ungefähr 4 m und die durch Temperaturänderungen verursachten Längenänderungen zum Beispiel ungefähr 0,5% bis 1%, d.h. ungefähr 2 cm bis 4 cm.

Aus der DE 30 26 730 A sowie der DE 31 37 746 A und von zahlreichen Personenkraftwagen sind Abgasanlagen mit einem Auspuff und Haltemitteln bekannt, die den Auspuff am Fahrzeugkörper haltende Gummiringe aufweisen. Wenn eine Kraft auf einen derart gehaltenen Teil eines Auspuffs ausgeübt wird, stellen die Gummiringe einer Auslenkung des Auspuffs aus dessen Ruhestellung zuerst nur einen sehr kleinen Widerstand entgegen. Erst wenn die Auslenkungen der Auspuffteile gewisse Grenzwerte erreichen, steigt der von den Gummiringen erzeugte Widerstand sprunghaft an. Diese Grenzwerte betragen in der Praxis meistens etwa 1 cm bis 2 cm oder eventuell noch mehr. Die von den Haltemitteln gehaltenen Teile können sich also innerhalb der durch die genannten Grenzwerte begrenzten Bereiche fast frei bewegen. Aus der US 5 323 989 A und der US 4 060 143 A sind Abgasanlagen bekannt, deren Haltemittel ebenfalls elastische Elemente aufweisen und mindestens in verschiedenen Richtungen eine ziemlich freie, begrenzte Bewegung des Auspuffs ermöglichen. Aus einigen der zitierten Publikationen und aus der Praxis ist es ferner bekannt, den Auspuff zwischen dem Motor und dem (ersten) Schalldämpfer mit einem deformierbaren Leitungselement auszurüsten, das beispielsweise einen Wellenbalg oder einen Gummiring aufweist.

Die bekannten deformierbaren Leitungselemente dienen in erster Linie als Entkopplungselemente, um die stromabwärts von ihnen angeordneten Schalldämpfer und sonstigen Auspuffteile schwingungsmässig vom Motor zu entkoppeln. Da sich die bekannten Auspuffe und insbesondere deren stromabwärts von den deformierbaren Leitungselementen angeordneten Teile innerhalb gewisser Grenzen ziemlich frei bewegen können, werden in den Auspuffen trotz der deformierbaren Leitungselemente häufig Transversal-Schwingungen mit grossen Amplituden erzeugt. Dies ist insbesondere dann der Fall, wenn die Auspuffe Resonanzen im Bereich der vom Motor erzeugten Grundschwingungen haben. Die Schwingungen und sonstigen auf den Auspuff einwirkenden Beschleunigungen und Kräfte bewirken eine starke Beanspruchung der zum Auspuff gehörenden Rohre, Schalldämpfer-Gehäuse und deformierbaren Leitungselemente. Die Rohre eines Auspuffs haben daher bei Personenkraftwagen eine mindestens 1,5 mm betragende Wanddicke. Die Schalldämpfer haben üblicherweise Gehäuse mit Mänteln und Endwänden, deren Wanddicken bei Personenkraftwagen ebenfalls mehr als 1 mm und häufig mindestens 1,5 mm betragen. Die Auspuffrohre und Schalldämpfer-Gehäuse von Lastkraftwagen haben meistens noch grössere Wanddicken. Der Auspuff der bekannten Abgasanlagen ist daher schwer. Zudem muss bei bekannten Abgasanlagen oft noch ein das Gewicht vergrössernder Hitzeschutzschild zwischen dem bzw. jedem Schalldämpfer und dem Fahrzeugboden angeordnet werden. Das hohe Gewicht der bekannten Abgasanlagen erfordert für deren Herstellung viel Material, beispielsweise viel relativ teuren, rostfreien Stahl, und vergrössert vor allem den Treibstoffverbrauch beim Fahren. Ferner treten trotz der grossen Wanddicken ziemlich häufig Brüche des Auspuffs auf. Da die Schalldämpfer der bekannten Auspuffe normalerweise quer zur allgemeinen Längsrichtung des Auspuffs ausgehend von ihrer Mittel- und/oder Ruhelage in verschiedenen transversalen Richtungen bis mindestens 1 cm und oft bis 2 cm oder noch mehr ausgelenkt werden, beanspruchen sie zusätzlich zu dem von ihnen eingenommenen Platz auch noch Platz für ihre Transversal-Bewegungen. Dies hat oft den Nachteil zur Folge, dass die Schalldämpfer nicht so gross bemessen werden können, wie es für eine gute Schalldämpfung wünschenswert wäre.

Die US 5 331 810 A offenbart einen Verbrennungsmotor und eine Abgasanlage mit einem Auspuff. Der letztere hat einen ersten und einen zweiten Auspuffkrümmer. Jeder von diesem ist starr mit drei Abgasauslässen des Motors verbunden. Die beiden Auspuffkrümmer sind durch eine Verbindungsleitung miteinander verbunden, die einen Wellenbalg aufweist. Der zweite Auspuffkrümmer ist durch eine starre Katalysatorzuleitung mit dem Eingang eines Katalysators verbunden. Die Verbindungsleitung und die Katalysatorzuleitung sind im Wesentlichen doppelwandig und haben ein inneres Rohr und eine Aussenwand. Das innere Rohr hat eine dünne, nur 0,46 mm dicke Wand, damit die sich zwischen dem Motor und dem Katalysator befindenden Leitungen nur eine kleine Wärmekapazität haben. Dagegen soll die Aussenwand eine mindestens 1,1 mm und zum Beispiel 1,4 mm betragende Dicke haben und als tragende Struktur dienen. Die zwischen dem Motor und dem Katalysator vorhandenen Leitungen haben also trotz der kleinen Wanddicke des innern Rohrs ein grosses Gewicht. Ferner sind die doppelwandigen Rohre und deren Verbindung durch den Wellenbalg ziemlich kompliziert und verteuern die Herstellung der Abgasanlage. Im Übrigen ist in der US 5 331 810 A nicht offenbart, wie die stromabwärts vom Katalysator angeordneten Auspuffteile ausgebildet sind und gehalten werden. Die aus der US 5 331 810 A bekannte Abgasanlage weist also einen schweren sowie komplizierten und teuren Auspuff auf und hat wahrscheinlich auch sonst mindestens zum Teil ähnliche Nachteile wie die vorher kommentierten, bekannten Abgasanlagen.

Die DE 44 23 939 A offenbart ein Kraftfahrzeug mit einem Verbrennungsmotor, einem Getriebe und einem Auspuff. Der letztere besitzt einen Katalysator, ein flexibles Rohr, einen Vorschalldämpfer, einen Hauptschalldämpfer und einige offenbar starre Rohre. Ferner sind Haltemittel zum Halten des Auspuffs vorhanden. Die Haltemittel weisen zwei je ein Rohr des Auspuffs mit dem Gehäuse des Getriebes verbindenden Halter und einen das Einlassende des Vorschalldämpfers mit dem Fahrzeugkörper verbindenden Halter auf. Dieses Dokument enthält keine Angaben über die Dicken der Rohrwände und Gehäusewände. Es scheint daher plausibel, dass die Wanddicken der Rohre und Gehäuse wie bei den meisten bekannten Abgasanlagen mindestens ungefähr 1,5 mm betragen und dass der Auspuff dementsprechend schwer ist.

Der Erfindung liegt die Aufgabe zugrunde, Nachteile der bekannten Abgasanlagen zu vermeiden und insbesondere eine Abgasanlage zu schaffen, die in bezug auf die Strömungsrate des durch die Abgasanlage abzuleitenden Abgases und in bezug auf die Länge und die charakteristischen Querschnittabmessungen des Auspuffs ein geringes Gewicht hat und trotzdem dauerhaft ist.

Diese Aufgabe wird erfindungsgemäss durch eine Abgasanlage mit den Merkmalen des Anspruchs 1 gelöst.

Die Erfindung betrifft ferner ein Kraftfahrzeug, das erfindungsgemäss die Merkmale des Anspruchs 27 aufweist.

Vorteilhafte Ausgestaltungen der Abgasanlage gehen aus den abhängigen Ansprüchen hervor.

Gemäss der Erfindung kann mindestens ein grosser Teil des Auspuffs sehr dünnwandig ausgebildet werden. Dadurch kann das Gewicht einer erfindungsgemässen Abgasanlage gegenüber dem Gewicht von bekannten Abgasanlagen mit ähnlichen Durchlassquerschnittsflächen. Querschnittsabmessungen und Längen der verschiedenen Auspuffteile beträchtlich verkleinert werden. Das Gewicht des stromabwärts des in der Abgassströmungsrichtung ersten elastisch deformierbaren Leitungselements angeordneten Auspuffsteils kann beispielsweise bei sonst ungefähr gleicher Bemessung um ungefähr oder mehr als 50% verkleinert werden.

Bei einer vorteilhaften Weiterbildung des Erfindungsgegenstands ist im Gehäuse des bzw. jedes Schalldämpfers eine Schicht eines schallabsorbierenden und wärmeisolierenden Isolationsmaterials zwischen dem Mantel des Gehäuses und einem hohlen Innenraum vorhanden. Ferner ist vorzugsweise auch zwischen jeder Endwand und dem hohlen Innenraum des bzw. jedes Schalldämpfers schallabsorbierendes und wärmeisolierendes Isoliermaterial vorhanden. Falls der Auspuff einen stromabwärts des ersten elastisch deformierbaren Leitungselements und/oder unterhalb des Fahrzeugbodens angeordneten Katalysator aufweist, kann dessen Gehäuse ebenfalls analog angeordnete schallabsorbierende und wärmeisolierende Isolationsmaterialien aufweisen. Diese Isolationsmaterialien bestehen vorzugsweise aus mineralischen Fasern, zum Beispiel aus Basaltwolle und/oder sonstiger Steinwolle und/oder eventuell Glaswolle. Ein solches Material hat eine hohe Temperaturbeständigkeit und eine relativ geringe Dichte. Eine solche Wärmeisolation des bzw. mindestens eines oder jedes unter dem Fahrzeugboden angeordneten Gehäuses ermöglicht, die Wärmeübertragung auf den Fahrzeugboden trotz dünnwandiger Gehäuse niedrig zu halten sowie auf das Anbringen eines metallischen Hitzeschilds am Fahrzeugboden zu verzichten und dadurch zusätzlich Gewicht einzusparen.

Gemäss der Erfindung sind die Haltemittel ausgebildet, um das bzw. mindestens das (erste) entlang dem Auspuff in der Abgas-Strömungsrichtung auf das erste elastisch deformierbare Leitungselement folgende Gehäuse derart am Fahrzeugkörper zu halten, dass dieses bzw. jedes Gehäuse durch die vom Verbrennungsmotor erzeugten Schwingungen und durch die sonst auf den Auspuff einwirkenden Beschleunigungen und Kräfte mindestens in allen ungefähr zur Fahrzeug-Längsrichtung rechtwinkligen Richtungen höchstens wenig ausgelenkt wird. Durch eine solche relativ starre Befestigung werden mindestens Resonanzen von Transversal-Schwingungsmodi des (ersten) stromabwärts des (ersten) elastisch deformierbaren Leitungselements angeordneten Gehäuses und damit praktisch des ganzen stromabwärts des genannten Leitungselements angeordneten Auspuffteils weitgehend unterdrückt. Dementsprechend werden auch die Schwingungsamplituden und sonstige durch das Fahren verursachte Bewegungen des genannten Auspuffteils stark reduziert. Dies ermöglicht wiederum, die stromabwärts des (ersten) elastisch deformierbaren Leitungselements angeordneten Rohre und Gehäuse dünnwandig sowie leicht auszubilden und trotzdem eine hohe Lebensdauer des Auspuffs zu erzielen. Die Reduktion der transversalen Auslenkung ermöglicht ferner den Durchmesser oder sonstige Querschnittsabmessungen eines Schalldämpfer-Gehäuses zu vergrössern, ohne dass dieses infolge von Schwingungen oder sonstigen Beschleunigungen gegen den Fahrzeugboden oder andere Teile des Fahrzeugkörpers stösst. Eine solche Vergrösserung eines Schalldämpfer-Gehäuses ermöglicht wiederum eine Verbesserung der Schalldämpfung.

Die Haltemittel weisen vorzugsweise für das bzw. jedes Gehäuse, das stromabwärts mindestens des (ersten) elastisch deformierbaren Leitungselements angeordnet ist, mindestens einen Halter auf, der direkt mit dem Gehäuse verbunden ist. Es ist dann nicht nötig die Rohre selbst unmittelbar am Fahrzeugkörper zu halten. Da ein Schalldämpfer und/oder Katalysator mit einem Gehäuse normalerweise eine grössere Masse und ein grösseres Gewicht pro Längeneinheit hat als ein Rohr, tragen direkt an den bzw. jedem Gehäuse angreifende Haltemittel zu einer stabilen Befestigung und einer geringen mechanischen Beanspruchung der verschiedenen Teile des Auspuffs bei.

Der Erfindungsgegenstand wird anschliessend anhand in der Zeichnung dargestellter Ausführungsbeispiele erläutert. In der Zeichnung zeigt
die Fig. 1 ein schematisch, teils in Ansicht, teils im Schnitt gezeichnetes Kraftfahrzeug mit einer Abgasanlage,
die Fig. 2 ein teils in Ansicht, teils im Längsschnitt gezeichnetes elastisch deformierbare Leitungselement der Abgasanlage,
die Fig. 3 einen Längsschnitt durch den ersten Schalldämpfer der Abgasanlage,
die Fig. 4 einen Querschnitt durch den ersten Schalldämpfer.
die Fig. 5 einen Längsschnitt durch den zweiten Schalldämpfer der Abgasanlage,
die Fig. 6 einen Querschnitt durch den zweiten Schalldämpfer,
die Fig. 7 einen Schnitt durch den Fahrzeugboden und eine Ansicht des ersten Schalldämpfers und eines zu dessen Befestigung dienenden Halters,
die Fig. 8 einen Schnitt durch einen Halter entlang der Linie VIII-VIII der Fig. 7 in grösserem Massstab,
die Fig. 9 einen Schnitt durch den Fahrzeugboden und eine Ansicht des zweiten Schalldämpfers,
Fig. 10 einen Axialschnitt durch eine Variante eines Verbindungsorgans eines Halters,
Fig. 11 einen Axialschnitt durch noch ein anderes Verbindungsorgan eines Halters,
Fig. 12 eine zur Fig. 7 analoge Darstellung mit einem anderen Halter,
Fig. 13 eine Draufsicht auf Teile des Halters gemäss Fig. 12,
die Fig. 14 eine zur Fig. 7 analoge Darstellung mit einem anderen Halter,
die Fig. 15 eine Draufsicht auf Teile des in der Fig. 14 ersichtlichen Halters,
die Fig. 16 eine zur Fig. 7 analoge Darstellung mit einem anderen Halter,
die Fig. 17 eine zur Fig. 7 analoge Darstellung mit noch einem anderen Halter,
die Fig. 18 eine zur Fig. 1 analoge Darstellung eines Kraftfahrzeugs mit einer anderen Abgasanlage und
die Fig. 19 einen Längsschnitt durch ein Gehäuse, das Katalysatormittel enthält und einen Teil eines Schalldämpfers bildet.

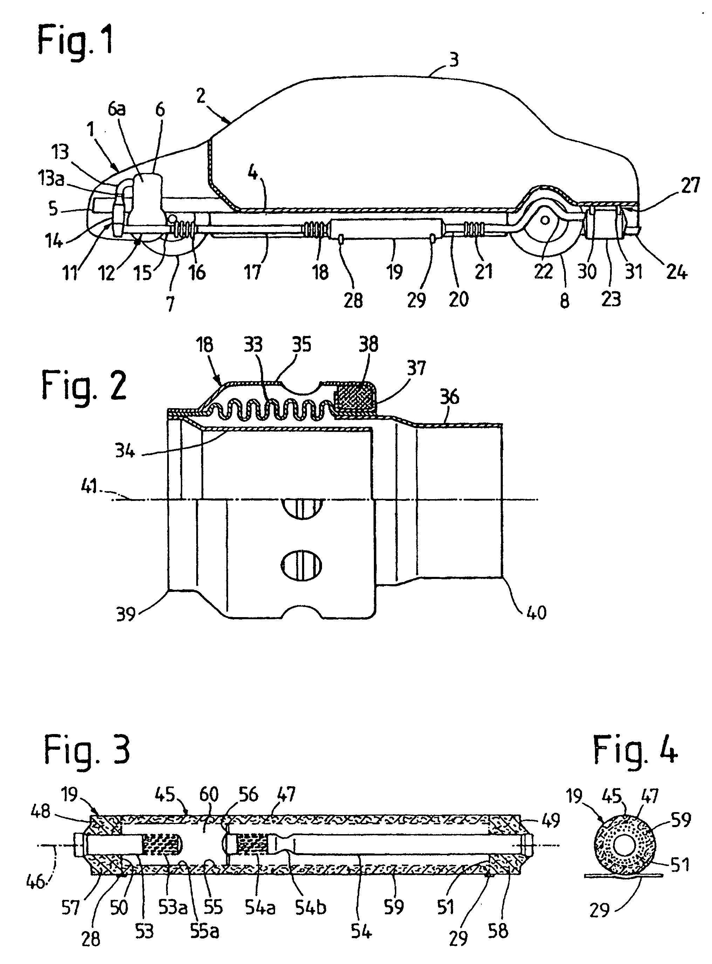

Das schematisch in der Fig. 1 gezeichnete Kraftfahrzeug 1 besteht aus einem Personenkraftwagen und besitzt einen Fahrzeugkörper 2. Dieser weist eine selbsttragende Karosserie 3, einen Fahrzeugboden 4 und ein Gestell 5 auf. Der Fahrzeugkörper 2 hält einen Verbrennungsmotor 6, Vorderräder 7, Hinterräder 8 und eine als Ganzes mit 11 bezeichnete Abgasanlage. Der Verbrennungsmotor 6 besitzt ein schwingungsdämpfend am Gestell 5 befestigtes Motorgehäuse 6a mit mehreren Abgasauslässen, von denen jeder einem Zylinder des Motors zugeordnet ist. Die Abgasanlage 11 besitzt als Hauptbestandteil einen Auspuff 12. Dieser weist in der Strömungsrichtung des Abgases der Reihe nach eine Einlass- und Sammelvorrichtung 13, einen Katalysator 14, ein kurzes Rohr 15, ein erstes elastisch deformierbares Leitungselement 16, ein längeres, gerades Rohr 17, ein zweites elastisch deformierbares Leitungselement 18, einen ersten Schalldämpfer 19, ein kurzes Rohr 20, ein drittes elastisch deformierbares Leitungselement 21, ein längeres, gebogenes Rohr 22, einen zweiten Schalldämpfer 23 und ein in die Umgebung mündendes Auslassrohr 24 auf. Der Verbrennungsmotor 6 befindet sich beim vorderen Ende des Kraftfahrzeugs 1. Der Auspuff 12 verläuft im allgemeinen ungefähr parallel zur Längs- und Fahrrichtung des Kraftfahrzeugs 1 vom Verbrennungsmotor 6 zum Heck des Fahrzeugs und befindet sich zum grössten Teil unterhalb des Fahrzeugbodens 4. Zur Abgasanlage 11 gehören ferner Haltemittel 27. Diese weisen vier Halter 28, 29, 30, 31 auf, welche die beiden Schalldämpfer 19 und 23 in der Nähe von deren Enden mit einem starren Teil des Fahrzeugkörpers 2, nämlich mit dem Fahrzeugboden 4 verbinden.

Die Einlass- und Sammelvorrichtung 13 besitzt einen Auspuffkrümmer, der für jeden Abgasauslass des Motors ein gebogenes Einlassrohr aufweist, dessen Eingang mit einem der Abgasauslässe des Motorgehäuses verbunden ist. Die Vorrichtung 13 besitzt ferner die Ausgänge der Einlassrohre miteinander verbindende Sammelverbindungsmittel und einen für alle Einlassrohre gemeinsamen Ausgang 13a. Die Einlass- und Sammelvorrichtung 13 ist beispielsweise vollständig starr, kann jedoch eventuell mindestens ein elastisch deformierbares Entkopplungselement mit einem Wellenbalg oder dergleichen aufweisen, das eines der Einlassrohre mit dem gemeinsamen Ausgang 13a verbindet. Der gemeinsame Ausgang 13a soll jedoch durch die Sammelverbindungsmittel starr mit mindestens einem der Eingangsrohre und mit dem Motorgehäuse 6a verbunden sein. Der Katalysator 14 hat ein starres Gehäuse mit einem Eingang, der starr mit dem gemeinsamen Ausgang 13a der Einlass- und Sammelvorrichtung 13 verbunden ist. Die Rohre 15, 17, 20, 22, 24 sind starr. Die Einlass- und Sammelvorrichtung 13, das Gehäuse des Katalysators 14 sowie die Rohre 15, 17, 20, 22 und 24 bestehen aus metallischen Materialien, beispielsweise rostfreiem Stahl. Die Vorrichtung 13, das Gehäuse des Katalysators 14 und das Rohr 15 sind dicht miteinander verbunden, nämlich verschweisst.

Die drei elastisch deformierbaren Leitungselemente 16, 18, 21 sind in Fig. 1 nur schematisch dargestellt und weisen zum Beispiel einen metallischen, nämlich aus rostfreiem Stahl bestehenden, flexiblen, biegbaren, verlängerbaren und verkürzbaren Wellenbalg auf, dessen Enden dicht und fest mit den jeweils vorangehenden und nachfolgenden Auspuffteilen verbunden, beispielsweise mittelbar oder unmittelbar verschweisst sind. Die Leitungselemente 16, 18, 21 können noch zusätzliche Teile aufweisen. Das zweite elastisch deformierbare Leitungselement 18 ist zum Beispiel gemäss der Fig. 2 ausgebildet und besitzt als Hauptbestandteile einen Wellenbalg 33, eine sich innerhalb von diesem befindende, innere Hülse 34, eine den Wellenbalg im Querschnitt umschliessende, als Schutzmantel dienende äussere Hülse 35 und einen Stutzen 36. Das Leitungselement 18 besitzt ferner einen im Querschnitt ungefähr U-förmigen Ring 37 mit einer gegen aussen offenen Rinne und ein in dieser gehaltenes, deformierbares Dämpfungsorgan 38. Dieses ist durch ein mehrlagiges, zu einem Ring mit vollem Querschnitt geformten Drahtgewebe gebildet und ragt aussen aus der Rinne des Rings 37 hinaus. Die genannten Teile des Leitungselements 18 bestehen aus metallischen Materialien, beispielsweise rostfreiem Stahl. Der Wellenbalg 33 hat an beiden Enden einen zylindrischen Endabschnitt und ist an seinem sich in der Fig. 2 links befindenden Ende starr sowie dicht mit den Enden der beiden Hülsen 34, 35 verbunden, nämlich verschweisst. Diese Enden des Wellenbalgs 33 und der Hülsen bilden zusammen den ersten Anschluss 39 - nämlich den Eingang - des Leitungselements 18. Das sich in der Fig. 2 rechts befindende Ende des Wellenbalgs ist fest und dicht mit dem weiteren Endabschnitt des Stutzens 36 und mit dem Ring 37 verbunden, nämlich verschweisst. Der andere, engere Endabschnitt des Stutzens 36 bildet den zweiten Anschluss 40 - nämlich den Ausgang - des Leitungselements. Die innere Hülse 34 ragt bis in den weiteren Endabschnitt des Stutzens 36 hinein. Der zylindrische Hauptabschnitt der inneren Hülse 34 ist durch Ringspalte von den inneren Wellenscheiteln des Wellenbalgs 33 und der Innenfläche des Stutzens 36 getrennt. Die äussere Hülse 35 hat einen zylindrischen Mittelabschnitt, der durch einen Zwischenraum von den äusseren Wellenscheiteln des Wellenbalgs getrennt ist und einige Löcher aufweist. Der sich in der Fig. 2 rechts befindende Endabschnitt der äusseren Hülse 35 ist nach innen abgebogen und umgreift einen Abschnitt des Dämpfungsorgans 38. Das Leitungselement 18 ist im allgemeinen rotationssymmetrisch zu einer Achse 41.

Das erste und das dritte elastisch deformierbare Leitungselement 16 bzw. 21 sind zum Beispiel gleich oder ähnlich ausgebildet wie das zweite elastisch deformierbare Leitungselement 18. Die Leitungselemente 16, 18, 21 können jedoch auch unterschiedlich bemessen und/oder ausgebildet und auf verschiedene Arten geändert werden. Die innere Hülse 34 kann beispielsweise zur Vergrösserung der Biegbarkeit des Wellenbalgs weggelassen werden. Ferner können die äussere Hülse 35, der Ring 37 und das Dämpfungsorgan 38 beispielsweise insbesondere beim ersten Leitungselement 16 oder bei allen Leitungselementen 16, 18, 21 durch einen flexiblen, dehnbaren und verkürzbaren, aus Drähten oder Metallbändern gebildeten Mantel ersetzt werden.

Das erste elastisch deformierbare Leitungselement 16 dient insbesondere als Schwingungsdämpfer sowie Entkopplungselement und soll die sich in bezug auf die Abgas-Strömungsrichtung stromabwärts vom Leitungselement 16 befindenden Teile des Auspuffs 12 schwingungsmässig vom Motor entkoppeln sowie möglichst weitgehend verhindern, dass beim Betrieb vom Motor erzeugte Vibrationen bzw. Schwingungen vom Motorgehäuse auf die sich stromabwärts vom Leitungselement 16 befindenden Auspuffteile übertragen werden. Das zweite und das dritte Leitungselement 18 bzw. 21 dienen ebenfalls noch zur schwingungsmässigen Entkopplung. Das erste und das zweite Leitungselement 16 bzw. 18 sollen die sich stromabwärts von ihnen befindenden Auspuffteile zudem auch in bezug auf sonstige, d.h. nicht durch Schwingungen verursachte Bewegungen, insbesondere Kippbewegungen, vom Motorgehäuse entkoppeln.

Die Wellenbälge der drei Leitungselemente 16, 18, 21 und insbesondere des zweiten und dritten Leitungselements 18 und 21 können ferner unter elastischen Deformationen ihre Längen ändern und insbesondere ausgehend von ihren Ruhezuständen entlang ihren Achsen verkürzt werden. Beim separat in Fig. 2 gezeichneten zweiten Leitungselement 18 werden dann die beiden Hülsen 34, 35 beispielsweise ausgehend vom gezeichneten, bei ruhendem Motor eingenommenen Ruhezustand nach rechts gegen den Anschluss 40 verschoben. Der parallel zur Achse 41 des Leitungselements 18 gemessene Abstand der beiden Anschlüsse 39, 40, d. h. die Länge des Leitungselements kann vorzugsweise mindestens 5 mm und zum Beispiel bis ungefähr 10 mm oder sogar noch etwas mehr verändert, d.h. ausgehend von einem Ruhezustand verkleinert und/oder vergrössert werden. Das erste und das dritte Leitungselement 16 bzw. 21 können ihre Länge vorzugsweise ebenfalls mindestens 5 mm und beispielsweise bis ungefähr 10 mm oder noch mehr ändern, d.h. ausgehend von einem Ruhezustand verkleinern und/oder vergrössern.

Die beiden Leitungselemente 16 und 18 können durch Temperaturänderungen verursachte Längenänderungen der sich stromaufwärts des ersten Schalldämpfers 19 befindenden Rohre 15 und 17 und sonstiger fester Auspuffteile ausgleichen. Die beiden Leitungselemente 16, 18 können dabei zusammen zu ihren Achsen und/oder zur Längsrichtung des Kraftfahrzeugs und/oder zur Achse des ersten Schalldämpfers 19 parallele Längen- und sonstige Abmessungsänderungen ausgleichen, die bis mindestens 5 mm oder bis mindestens 10 mm oder sogar bis ungefähr oder mehr als 20 mm betragen. Das dritte Leitungselement 21 kann Längenänderungen der sich zwischen den beiden Schalldämpfern 19, 23 befindenden Rohre 20, 22 ausgleichen. Das dritte Leitungselement 21 kann dabei Längenänderungen und/oder sonstige Abmessungsänderungen in zu seiner Achse und/oder zur Längsrichtung des Kraftfahrzeugs und/oder zu den Achsen des ersten Schalldämpfers 19 und/oder zweiten Schalldämpfers paralleler Richtung ausgleichen, die bis mindestens 5 mm und zum Beispiel bis mindestens 10 mm betragen.

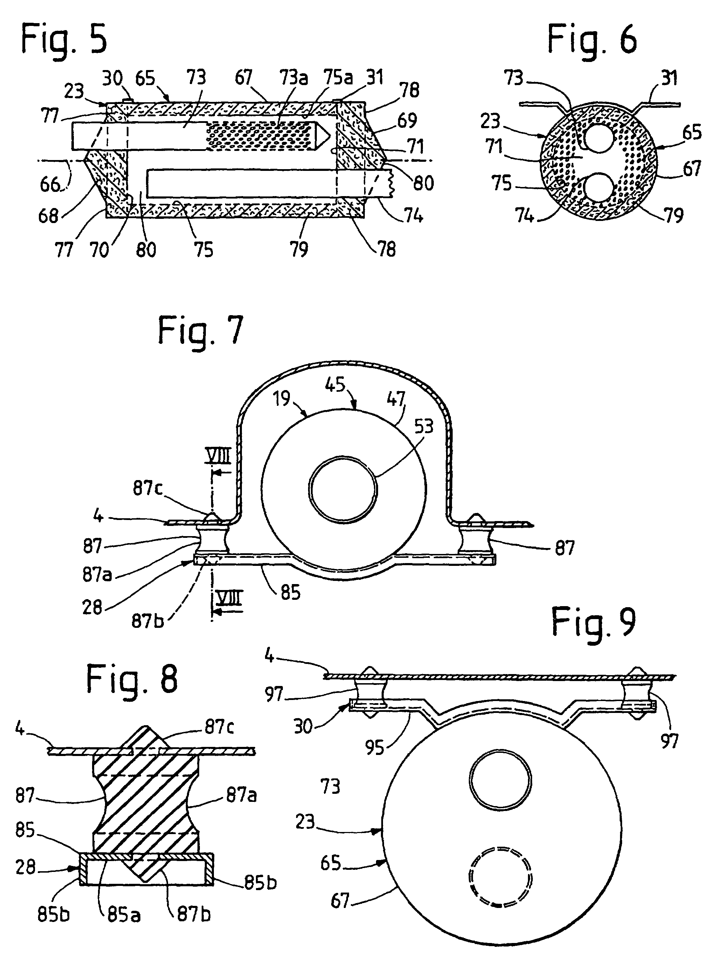

Der separat in den Figuren 3 und 4 ersichtliche, erste Schalldämpfer 19 besitzt ein längliches, dichtes Gehäuse 45, das im allgemeinen rotationssymmetrisch zu einer geraden Achse 46 ist. Die Wandung des Gehäuses 45 weist einen im wesentlichen zylindrischen Mantel 47 und zwei einander abgewandte, dicht und fest mit dem Mantel verbundene Endwände 48 bzw. 49 auf. Die beiden Endwände sind zur Versteifung des Gehäuses beispielsweise mindestens teilweise konisch oder gewölbt. Das Gehäuse 45 enthält zwei gasdurchlässige Zwischenwände 50, 51, von denen sich jede in der Nähe von einer der Endwände 48, 49 befindet und aus einer im wesentlichen ebenen, ringförmigen, Scheibe besteht. Die beiden Zwischenwände 50, 51 sind mindestens stellenweise perforiert und weisen zur Erzielung einer guten Steifigkeit vorzugsweise auch mindestens einen kompakten, unperforierten Bereich auf. Der Schalldämpfer 19 besitzt zwei zur Achse 46 koaxiale Rohre 53 und 54. Das Rohr 53 durchdringt die sich beim linken Ende des Schalldämpfers befindende Endwand 48 und Zwischenwand 50. Das andere Rohr 54 durchdringt die Endwand 49 und die Zwischenwand 51. Die Rohre 53, 54 sind starr und dicht mit der Endwand 48 bzw. 49 verbunden. Die Zwischenwände 50, 51 sind fest und mehr oder weniger dicht mit dem Mantel 47 und/oder mit dem Rohr 53 bzw. 54 verbunden und haben beispielsweise durch Punktschweiss-Verbindungen am Mantel befestigte Flansche. Das äussere Ende des Rohrs 53 bildet den Eingangsanschluss des Schalldämpfers 19 und ist mit dem Leitungselement 18 verbunden. Das äussere Ende des Rohrs 54 bildet den Ausgangsanschluss des Schalldämpfers 19 und ist über das Rohr 20 mit dem Leitungselement 21 verbunden. Jedes Rohr 53, 54 hat in der Nähe seines inneren Endes einen gasdurchlässigen, perforierten Abschnitt 53a bzw. 54a. Das Rohr 54 hat zwischen seinem perforierten Abschnitt 54a und seinem als Ausgangsanschluss dienenden Ende noch eine als Drossel 54b dienende Einschnürung. Die inneren Enden der beiden Rohre 53, 54 sind in axialer Richtung durch einen Zwischenraum voneinander getrennt. Das innere Ende des Rohrs 53 ist durch Zusammenquetschen mehr oder weniger dicht verschlossen oder eventuell offen. Das innere Ende des Rohrs 54 ist zusammengequetscht und mehr oder weniger dicht verschlossen. Das Gehäuse 45 enthält zwischen den beiden Zwischenwänden 50 und 51 einen im allgemeinen zylindrischen Innenmantel 55. Dieser besteht aus zwei hülsenförmigen Innenmantelteilen, von denen jeder am einen Ende an einer der Zwischenwände 50, 51 befestigt ist. Die anderen, den Zwischenwänden abgewandten Endabschnitte der beiden Innenmantelteile umschliessen einander mit höchstens kleinem Spiel und sind parallel zur Achse 46 gegeneinander verschiebbar. Der zweiteilige Innenmantel 55 ist im grössten Teil seiner Länge gasdurchlässig und perforiert, hat jedoch in der Nähe seines sich links befindenden Endes einen kompakten, d.h. lochfreien Abschnitt 55a, der die Achse 46 umschliesst, sich ungefähr über den Längenbereich des perforierten Rohr-Abschnitts 53a erstreckt und beispielsweise an beiden Enden ein wenig über den letzteren hinausragt. Der in sich innerhalb des Gehäuses 45 befindende Abschnitt des Rohrs 54 ist länger als die halbe Länge des Gehäuses und ist an seinem inneren Ende mit einigen stäbchenförmigen Stützen 56 am Innenmantel 55 abgestützt. Das Gehäuse 45, die Zwischenwände 50, 51, die beiden Rohre 53, 54, der Innenmantel 55 und die Stützen 56 bestehen aus metallischen Materialien, beispielsweise rostfreiem Stahl. Die zwischen der Endwand 48 und der Zwischenwand 50 sowie zwischen der Endwand 49 und der Zwischenwand 51 vorhandenen, das Rohr 53 bzw. 54 umschliessenden, ringförmigen Zwischenräume sind mit einer Schicht oder Füllung von wärmeisolierendem und schallabsorbierendem Material 57 bzw. 58 gefüllt. Der im Querschnitt ringförmige Zwischenraum, der sich zwischen den beiden Zwischenwänden 50, 51 und zwischen dem Mantel 47 des Gehäuses sowie dem Innenmantel 55 befindet, ist ebenfalls mit einer Schicht von wärmeisolierendem und schallabsorbierendem Material 59 gefüllt. Die Materialien 57, 58, 59 bestehen zum Beispiel aus Fasern der in der Einleitung genannten Art. Dagegen ist der im Querschnitt vom Innenmantel 55 umschlossene, zwischen den beiden Zwischenwänden 50, 51 vorhandene Innenraum 60 - abgesehen von den Rohren 53, 54 und Stützen - hohl und leer.

Der zweite, separat in den Figuren 5 und 6 gezeichnete Schalldämpfer 23 hat ein Gehäuse 65 mit einer geraden Achse 66. Das Gehäuse hat einen zylindrischen Mantel 67 und zwei Endwände 68, 69. Das Gehäuse enthält zwei scheibenförmige, mindestens stellenweise gasdurchlässige, perforierte Zwischenwände 70, 71. Der Schalldämpfer 23 hat zwei Rohre 73 und 74. Das Rohr 73 durchdringt die Endwand 68 sowie die Zwischenwand 70. Das Rohr 74 durchdringt die Endwand 69 sowie die Zwischenwand 71. Das Gehäuse 65 des zweiten Schalldämpfers 23 ist kürzer als das Gehäuse 45 des ersten Schalldämpfers 19, hat aber einen grösseren Durchmesser als das Gehäuse 45. Die Rohre 73, 74 sind parallel zur Achse 66, aber auf verschiedenen Seiten von dieser angeordnet.

Ferner haben die beiden Rohre 73, 74 sich nebeneinander im gleichen Längsbereich des Gehäuses 65 befindende Abschnitte. Das äussere Ende des Rohrs 73 bildet den Eingangsanschluss des zweiten Schalldämpfers 23 und ist mit dem Rohr 22 verbunden. Das Rohr 73 ist an seinem sich im Gehäuse 65 befindenden Ende zusammengequetscht sowie mehr oder weniger dicht abgeschlossen oder offen und hat in der Nähe dieses Endes einen gasdurchlässigen, perforierten Abschnitt 73a. Das Rohr 74 ist an seinem inneren Ende offen und hat keinen perforierten Abschnitt. Das äussere Ende des Rohrs 74 bildet den Ausgangsanschluss des zweiten Schalldämpfers 23 und ist mit dem Auslassrohr 24 verbunden und/oder bildet dieses. Der zweite Schalldämpfer 23 hat einen Innenmantel 75, der wie beim ersten Schalldämpfer aus zwei ineinander hineinragenden, gegeneinander verschiebbaren Innenmantelteilen besteht. Der Innenmantel 75 ist zum grössten Teil gasdurchlässig und perforiert, hat jedoch einen kompakten, lochfreien Abschnitt 75a. Dieser erstreckt sich über einen etwas längeren Längsbereich als der perforierte Abschnitt 73a des Rohrs 73, umschliesst jedoch die Achse 66 nicht vollständig, sondern nimmt nur einen sich in der Nähe des Rohrs 73 befindenden Umfangsbereich des Innenmantels ein.

Die beiden zwischen den Endwänden 68, 69 und einer der gasdurchlässigen Zwischenwände 70 bzw. 71 vorhandenen Zwischenräume enthalten ein Material 77 bzw. 78. Der zwischen dem Gehäuse-Mantel 67 und dem Innenmantel 75 vorhandene Zwischenraum enthält ein Material 79. Die Materialien 77, 78, 79 sind wiederum wärmeisolierend sowie schallabsorbierend und bestehen aus mineralischen Fasern. Der zwischen den beiden Zwischenwänden 70 und 71 vorhandene, im Querschnitt vom Innenmantel 75 umschlossene Innenraum 80 ist abgesehen von den Rohren 73, 74 hohl und frei. Soweit vorgängig nichts anderes geschrieben wurde, ist der zweite Schalldämpfer 23 ähnlich ausgebildet wie der erste Schalldämpfer 19.

Die schematisch in der Fig. 1 gezeichneten Halter 28, 29, 30, 31 zum Befestigen der beiden Schalldämpfer 19 und 23 können - abhängig von der Ausbildung des Fahrzeugbodens 3 - unterschiedlich ausgebildet sowie bemessen oder alle gleich sein. Die beiden zur Befestigung des ersten Schalldämpfers 19 dienenden Halter 28, 29 sind beispielsweise gleich oder ähnlich ausgebildet, stehen entlang der Schalldämpfer-Achse 46 in Abstand von einander und sind in der Nähe der beiden Enden des Schalldämpfers 19, nämlich bei dessen Zwischenwänden 50 bzw. 51 an dessen Mantel befestigt. Der Halter 28 ist zum Beispiel gemäss den Figuren 7 sowie 8 ausgebildet. In den Figuren 7 und 8 ist auch ein Ausschnitt des Fahrzeugbodens 4 ersichtlich. Dieser ist beispielsweise im allgemeinen mehr oder weniger eben, hat jedoch eine nach oben ragende Ausbuchtung. Diese begrenzt eine gegen unten offene Rinne, die häufig als Tunnel bezeichnet wird und in welcher sich mindestens ein Teil des Auspuffs 12 und insbesondere mindestens ein Querschnittsbereich des in der Fig. 7 in Endansicht dargestellten, ersten Schalldämpfers 19 befindet.

Der Halter 28 weist ein unmittelbar am Gehäuse 45 des ersten Schalldämpfers 19 angreifendes Halteorgan 85, und zwei das letztere mit dem Fahrzeugboden 4 verbindende Verbindungsorgane 87 auf. Das Halteorgan 85 besteht aus einem metallischem Material, beispielsweise rostfreiem Stahl. Das Halteorgan 85 ist starr, länglich sowie rechtwinklig zum Schalldämpfer 19 angeordnet und besteht im wesentlichen aus einem ü-Profilstab mit einem Steg 85a und zwei Schenkeln 85b. Der U-Profilstab ist an den Enden durch Endelemente verstärkt, die mit den Schenkeln verschweisst und entweder auch mit dem Steg verschweisst oder mit diesem zusammenhängend sind. Der mittlere Abschnitt des Halteorgans 85 ist parallel zum Mantel 47 des Schalldämpfer-Gehäuses 45 gebogen, liegt mit der äusseren, sich oben befindenden Fläche des Stegs 85a auf der unteren Seite des Schalldämpfer-Gehäuses 45 am Mantel 47 an und ist beispielsweise durch einige Punkt-Schweissverbindungen oder sonstige Schweiss-Verbindungen am Mantel 47 befestigt. Jedes Verbindungsorgan 87 ist mindestens teilweise elastisch deformierbar und besteht zum Beispiel aus einem einstückigen, gummielastischen Körper bzw. Gummikörper aus synthetischem und/oder natürlichen Gummi. Jedes Verbindungsorgan ist im wesentlichen rotationssymmetrisch zu einer Achse und hat einen im allgemeinen zylindrischen, aber im mittleren Bereich im Axialschnitt leicht eingebuchteten Hauptabschnitt 87a. Dieser hat über seine ganze axiale Abmessung einen vollen Querschnitt und enthält also keine freien Hohl- oder Zwischenräume oder Löcher. Der Hauptabschnitt 87a hat an seinen beiden Enden ebene, ringförmige Auflage- und/oder Endflächen und hängt im mittleren Bereich von jedem Ende mit einem in axialer Richtung von diesem wegragenden, ungefähr pilzförmigen Fortsatz zusammen, der Befestigungs- und/oder Verbindungsmittel 87b bzw. 87c bildet. Die beiden zum gleichen Halter 28 bzw. 29 gehörenden Verbindungsorgane 87 sind entlang dem Halteorgan 85 des betreffenden Halters gegeneinander versetzt und in der Nähe der Enden des Halteorgans angeordnet. Jedes Verbindungsorgan liegt mit den ebenen Auflage- und/oder Endflächen seines Hauptabschnitts 87a an der oberen Fläche des Stegs 85a des Halteorgans bzw. an einem Abschnitt der unteren Fläche des Fahrzeugbodens 4 an. Die pilzförmigen Befestigungsund/oder Verbindungsmittel 87b, 87c werden bei der Montage des Auspuffs unter einer vorübergehenden elastischen Deformation durch Löcher im Steg 85a bzw. Fahrzeugboden 4 hindurch gesteckt und schnappen dabei ein, so dass die Köpfe der Befestigungs- und/oder Verbindungsmittel den Steg 85a und den Fahrzeugboden 4 hintergreifen. Die Verbindungsorgane 87 verbinden die Halteorgane 85 und den an diesem angeschweissten ersten Schalldämpfer 19 dann lösbar mit dem Fahrzeugboden 4.

Der erste Schalldämpfer 19 wird also im montierten Zustand durch vier Verbindungsorgane 87 am Fahrzeugboden 4 des Fahrzeugkörpers 2 gehalten. Die vier Verbindungsorgane 87 bilden zusammen eine 4-Punkt-Aufhängung. Die Mittelpunkte der vier den ersten Schalldämpfer haltenden Verbindungsorgane 87 definieren in einer vertikalen Projektion auf eine horizontale Ebene, auf der das Kraftfahrzeug 1 steht, ein Viereck, beispielsweise ein Rechteck. Dabei sind auf jeder Seite einer durch die Achse 46 verlaufenden Vertikalebene zwei Verbindungsorgane vorhanden.

Der zweite Schalldämpfer 23, ist beispielsweise in der Nähe des hinteren Endes des Kraftfahrzeugs 1 hinter dessen Hinterachse unter einem mehr oder weniger ebenen Abschnitt des Fahrzeugbodens 4 angeordnet. Der vordere zum Halten des zweiten Schalldämpfers am Fahrzeugboden 4 dienende Halter 30 ist besonders deutlich in der Fig. 9 ersichtlich und besitzt ein starres, längliches, metallisches Halteorgan 95 und zwei mindestens teilweise elastisch deformierbare Verbindungsorgane 97. Das Halteorgan 95 ist ähnlich wie die Halteorgane 85 ausgebildet, liegt jedoch mit dem mittleren Abschnitt seines Steges auf der oberen Seite des Schalldämpfers 23 am Mantel 67 von dessen Gehäuse 65 an. Die Verbindungsorgane 97 des Halters 30 sind gleich oder ähnlich ausgebildet wie die Verbindungsorgane 87, ragen jedoch von oben her in die Rinne des Halteorgans 95 hinein und liegen an der Innenfläche von dessen Steg an. Der hintere Halter 31 des zweiten Schalldämpfers ist beispielsweise gleich oder ähnlich ausgebildet wie der vordere Halter 30. Soweit vorgängig nichts anderes geschrieben wurde, sind die Halter 30, 31 gleich oder ähnlich ausgebildet und am Schalldämpfer sowie am Fahrzeugboden befestigt wie die Halter 28, 29.

Der sich stromabwärts des Katalysators 14 befindende Teil des Auspuffs 12 ist im allgemeinen ungefähr parallel zur Längs- und Hauptfahrrichtung des Kraftfahrzeugs 1. Die Achsen der elastisch deformierbaren Leitungselemente 16, 18 und 21 sind im Ruhezustand gerade und beispielsweise ungefähr parallel zur Längs- und Hauptfahrrichtung des Kraftfahrzeugs. Die Achsen der Schalldämpfer sind beispielsweise mindestens annähernd parallel zur Längs- und Fahrrichtung des Kraftfahrzeugs.

Der Katalysator 14 und das Rohr 15 sind durch die Einlass- und Sammelvorrichtung 13 starr mit dem Motorgehäuse 6a verbunden. Die gummielastischen Verbindungsorgane 87, 97 der Halter 28, 29, 30, 31 ermöglichen infolge ihrer elastischen Deformierbarkeit kleine Auslenkungen der Schalldämpfer-Gehäuse 45 bzw. 65 aus den Ruhelagen dieser Gehäuse. Die aus kompakten Gummikörpern bestehenden Verbindungsorgane erzeugen jedoch schon bei sehr kleinen, beliebig gerichteten Auslenkungen diesen entgegenwirkende Rückstellkräfte, die mit wachsender Auslenkung innerhalb eines gewissen Bereichs stetig, monoton und beispielsweise mehr oder weniger linear zur Auslenkung wachsen. Die Verbindungsorgane 87, 97 ermöglichen also gewisse, aber nur relativ kleine Bewegungen der Schalldämpfer-Gehäuse. Die Verbindungsorgane ergeben zudem eine schwingungsdämpfende Verbindung der Schalldämpfer-Gehäuse mit dem Fahrzeugkörper. Die Verbindungsorgane 87, 97 der Halter 28, 29, 30, 31 sind vorzugsweise derart ausgebildet, dass jedes Schalldämpfer-Gehäuse 45, 65 bei zusammengebautem Auspuff durch eine auf ein oder jedes Gehäuse 45, 65 einwirkende, konstante, stationäre Beschleunigung von 10 m/s² und beispielsweise auch noch 20 m/s² oder sogar 50 m/s² oder eine konstante, stationäre Kraft von 100 N mit beliebiger Richtung bezüglich des Fahrzeugkörpers höchstens 5 mm und vorzugsweise höchstens 2 mm aus der Mittel- und/oder Ruhelage des betreffenden Gehäuses ausgelenkt wird. Die Gehäuse 45, 65 werden dann bei zusammengebautem Auspuff insbesondere auch durch Beschleunigungen oder Kräfte, welche die genannten Grössen sowie irgend eine beliebige Richtung aufweisen und beispielsweise ungefähr parallel zur Längs- und Hauptfahrrichtung des Kraftfahrzeugs und ungefähr parallel zu den Achsen 46, 66 der Gehäuse 45, 65 sind oder beispielsweise irgend eine zur Längsrichtung des Kraftfahrzeugs und zu den Achsen 46, 66 ungefähr rechtwinklige Richtung haben, höchstens 5 mm und vorzugsweise höchstens 2 mm aus einer Mittel- und/oder Ruhelage ausgelenkt bzw. verschoben. Die Halter können beispielsweise derart ausgebildet sein, dass die Auslenkungen der beiden Schalldämpfer-Gehäuse bei den genannten Beschleunigungen oder Kräften auch dann innerhalb der genannten Bereiche liegen, wenn die Gehäuse 45, 65 von den restlichen Auspuffteilen und voneinander getrennt sind.

Wie schon in der Einleitung erwähnt, wird der Auspuff durch das ihn vom Verbrennungsmotor zugeführte Abgas erhitzt. Der Auspuffkrümmer wird durch das Abgas beispielsweise auf eine Temperatur von mindestens 1000°C erhitzt. Die vorderen Rohre 15, 17 werden beispielsweise auf Temperaturen im Bereich von 500°C bis 800°C und die hinteren Rohre 20, 22, 24 auf Temperaturen von etwa 200°C bis 500°C erhitzt. Die erhitzten Teile des Auspuffs dehnen sich vorübergehend aus, so dass insbesondere die Rohre 15, 17, 20, 22 länger werden. Die Rohre und Gehäuse bestehen beispielsweise aus Stahl mit einem Längenausdehnungs-koeffizienten von ungefähr 1,2 10⁻⁵/°C. Die Rohre 15, 17 werden dann beispielsweise um ungefähr 0,6% bis 1% und die Rohre 20, 22, 24 um ungefähr 0,2% bis 0,6% verlängert.

Die in den Schalldämpfern vorhandenen Rohre 53, 54, 73, 74 werden vom Abgas ebenfalls erhitzt und auch verlängert. Da diese Rohre nur an einem Ende am Gehäuse des betreffenden Schalldämpfers befestigt und am anderen Ende frei sind, können sie sich ungehindert verlängern, ohne Spannungen zu erzeugen. Das Abgas erhitzt auch die Innenmäntel 55 und 75 der Schalldämpfer. Da jeder Innenmantel aus zwei Teilen besteht, deren eines Ende befestigt und deren anderes Ende verschiebbar ist, erzeugen die Längenänderungen der Innenmantelteile ebenfalls keine Spannungen.

Die in den Gehäusen der Schalldämpfer vorhandenen, aus Fasern bestehenden Materialien 57, 58, 59, 77, 78, 79 isolieren die Mäntel 47, 67 thermisch gegen das Abgas, so dass diese Mäntel durch das Abgas höchstens relativ geringfügig auf Temperaturen von beispielsweise ungefähr 100°C bis 300°C erhitzt werden. Ferner wird dadurch vermieden, dass die Gummikörper der Halter durch Erhitzung beschädigt werden. Da die Mäntel 47, 67 durch das heisse Abgas höchstens wenig erhitzt werden, verursacht die hohe Temperatur des Abgases auch höchstens kleine Verlängerungen der Mäntel 47, 67. Dadurch wird die Gesamt-Verlängerung des Auspuffs gegenüber einem konventionellen Auspuff mit Gehäusen ohne Wärmeisolation reduziert. Die allfällige Verlängerung der Gehäuse kann durch eine Deformation der gummielastischen Verbindungsorgane der Halter aufgenommen werden. Durch die Wärmeisolation wird mindestens weitgehend vermieden, dass das heisse Abgas Spannungen in den Mänteln erzeugt, obschon diese bei beiden Enden annähernd unbeweglich mit dem Fahrzeugboden verbunden sind.

Die die Materialien 57, 58, 59, 77, 78, 79 enthaltenden Zwischenräume der Schalldämpfer sind durch die Perforationslöcher der Zwischenwände 50, 51, 70, 71 und Innenmäntel 55, 75 hindurch mit den hohlen, freien, vom Abgas durchströmten Innenräumen 60 bzw. 80 verbunden. Die aus Fasern bestehenden, schallabsorbierenden Materialien ergeben daher auch eine wesentliche Verbesserung der Schalldämpfung.

Die thermisch verursachten Längenänderungen der Rohre 15, 17, 20 und die Längenänderungen der Schalldämpfer-Gehäuse werden mindestens zum grössten Teil durch die elastisch deformierbaren Leitungselemente 16, 18, 21 ausgeglichen. Es wirken daher höchstens geringe durch Temperaturänderungen verursachte Spannungen und Kräfte auf die Rohre und Schalldämpfer ein. Die Schalldämpfer werden durch die thermisch verursachten Längenänderungen der Rohre und die daraus resultierenden und nicht durch die deformierbaren Leitungselemente 16, 18, 21 kompensierten Restkräfte höchstens wenig, beispielsweise höchstens 2 mm, entgegen den von den deformierbaren Verbindungsorganen 87, 97 erzeugten Rückstellkräften verschoben, wobei solche allfälligen Verschiebungen der Schalldämpfer ungefähr parallel zu deren Achsen sind.

Wie schon in der Einleitung beschrieben, können bei der Verwendung des Kraftfahrzeugs durch die Vibrationen des Motorgehäuses und das pulsierende Abgas Schwingungen der verschiedenen Auspuffteile angeregt und zudem durch das Fahren auf die Auspuffteile einwirkende Beschleunigungen verursacht werden. Die Schalldämpfer haben von den stromabwärts des ersten elastisch deformierbaren Leitungselements 16 angeordneten Auspuffteilen die grösste Masse pro Längeneinheit. Die zwar etwas beweglichen, federnden und schwingungsdämpfenden, aber doch ziemlich starren Verbindungen der Schalldämpfer mit dem Fahrzeugkörper 2 verhindern starke Schwingungsresonanzen, Schwingungen mit grossen Amplituden und sonstige grössere Bewegungen der Schalldämpfer. Die Rohre 15, 17, 20, 22 und insbesondere die beiden Schalldämpfer 19, 23 werden durch die beim normalen Betrieb vom Verbrennungsmotor erzeugten Vibrationen und die allenfalls vom pulsierenden Abgas angeregten Schwingungen in allen Richtungen höchstens 5 mm, vorzugsweise höchsten 2 mm und normalerweise höchstens 1 mm oder sogar nur höchstens 0,5 mm aus ihren Mittellagen ausgelenkt, die sie nach Erreichen der Betriebstemperaturen infolge der thermischen Abmessungsänderungen einnehmen. Die beim normalen Fahrbetrieb des Kraftfahrzeugs durch Bodenunebenheiten, Kurven, Beschleunigungs- und Bremsvorgänge verursachten und auf den Auspuff einwirkenden Beschleunigungen verursachten Auslenkungen aus den genannten Mittellagen betragen in allen Richtungen ebenfalls höchstens 2 mm und normalerweise höchstens 0,5 mm. Ferner betragen auch die gesamten Schalldämpfer-Auslenkungen, die durch Temperaturänderungen, Schwingungen und sonstige Beschleunigungen verursacht werden, ausgehend von den bei stillstehendem Motor in kaltem Zustand eingenommenen Ruhelagen beim normalen Fahrbetrieb in allen Richtungen höchstens 5 mm und vorzugsweise höchstens 2 mm.

Die stromabwärts des Katalysators 14 und insbesondere des ersten elastisch deformierbaren Leitungselements 16 angeordneten Rohre brauchen keine grossen durch die Vibrationen oder das Fahren verursachten Beschleunigungen und Kräfte aufzunehmen. Die Rohre 15, 17, 20, 22 brauchen daher im wesentlichen nur ihr eigenes Gewicht und eventuell noch teilweise das Gewicht der elastisch deformierbaren Leitungselemente 16, 18, 21 zu tragen. Es ist daher nicht nötig die Rohre 15, 17, 20, 22, 24 durch unmittelbar an ihnen selbst angreifende Halter am Fahrzeugkörper zu halten. Die Rohre 15, 17, 20, 22, 24 und die in den Schalldämpfern vorhandenen Rohre 53, 54, 73, 74 können zudem relativ dünnwandig gemacht werden und haben Wanddicken, die mindestens im wesentlichen höchstens 1 mm, besser höchstens 0,8 mm und zum Beispiel ungefähr 0,5 mm betragen. Es sei angemerkt, dass die Rohre die mit ihnen verbundenen Teilen bei den Verbindungsstellen eventuell überlappen können, so dass sich dort eventuell Auspuffabschnitte mit etwas dickeren Wanddicken ergeben. Diese allenfalls vorhandenen, dickeren Abschnitte sind dann jedoch relativ kurz und sehr viel kürzer als der ganze Auspuff. Die Wände der Rohre des Auspuffkrümmers der Einlass- und Sammelvorrichtung 13 können eventuell ebenfalls etwas dünner als bei konventionellen, nicht erfindungsgemässen Abgasanlagen bemessen werden und eventuell ähnliche Dicken haben wie die nach dem Katalysator 14 angeordneten Rohre. Die Mäntel 47, 67, Endwände 48, 49, 68, 69 und Zwischenwände 50, 51, 70, 71 sowie Innenmäntel 55, 75 der beiden Schalldämpfer brauchen ebenfalls nur geringe Wanddicken aufzuweisen. Diese Wanddicken betragen mindestens bei den grössten Teilen dieser Mäntel und Wände höchstens 1 mm, besser höchstens 0,8 mm und zum Beispiel ungefähr 0,5 mm.

Die zwischen den Mänteln 47, 67 und den Innenmänteln 55 bzw. 75 der Schalldämpfer vorhandenen, aus Fasern bestehenden Materialien 59 bzw. 79 bilden Schichten, deren im Querschnitt in radialer Richtung gemessene Schichtdicken mindestens 10 mm und zum Beispiel ungefähr 20 mm betragen. Die in axialer Richtung gemessenen Abmessungen der zwischen einer Endwand und einer Zwischenwand vorhandenen Materialien 57, 58, 77, 79 betragen mindestens 10 mm, vorzugsweise mindestens 20 mm und zum Beispiel 25 mm bis 80 mm.

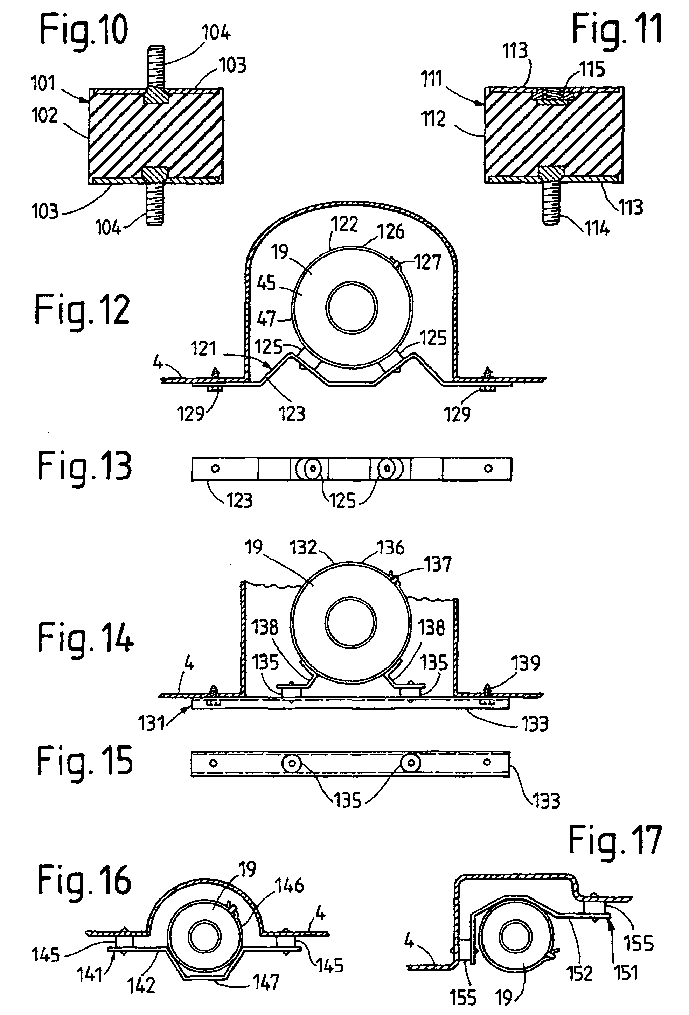

Das in Fig. 10 ersichtliche Verbindungsorgan 101 besteht aus einem Verbundkörper und ist im wesentlichen zu einer Achse rotationssymmetrisch. Das Verbindungsorgan 101 besitzt einen im wesentlichen zylindrischen aus natürlichem und/oder synthetischem Gummi bestehenden Gummikörper 102, der bei jedem seiner beiden Enden mit einer Ausnehmung versehen ist. Jede Ausnehmung enthält ein ebenes Plättchen 103 mit einem zentralen Loch und den Kopf von einer Befestigungs- und/oder Verbindungsmittel 104 bildenden, das Loch des Plättchens durchdringenden Schraube mit einem axial vom Gummikörper 102 wegragenden Gewindeteil. Die beiden Plättchen 103 sowie die Befestigungs- und/oder Verbindungsmittel 104 bestehen aus einem metallischen Material, beispielsweise Stahl und sind durch Angiessen und/oder Anvulkanisieren des Gummis und/oder durch Verkleben oder dergleichen fest sowie unlösbar mit dem Gummikörper verbunden. Der Gummikörper hat zwischen den durch die Plättchen 103 und Befestigungs- und/oder Verbindungsmittel 104 ausgefüllten Ausnehmungen einen vollen Querschnitt. Die Plättchen 103 und die diese umschliessenden Ränder des Gummikörpers 102 bilden zusammen ebene Auflage- und/oder Endflächen des Verbindungsorgans 101.

Das in Fig. 11 ersichtliche Verbindungsorgan 111 besteht ähnlich wie das Verbindungsorgan 101 aus einem Verbundkörper mit einem Gummikörper 112, zwei Plättchen 113 sowie Befestigungs- und/oder Verbindungsmitteln 114, 115. Die einen Befestigungs- und/oder Verbindungsmittel 114 sind wie beim Verbindungsorgan 101 schraubenförmig. Die anderen Befestigungsund/oder Verbindungsmittel 115 sind durch eine vom Gummikörper her in das Loch des Plättchens hineinragende Gewindebuchse oder Mutter gebildet, deren Gewindebohrung an dem sich tiefer im Gummikörper befindenden Ende des Befestigungselements durch eine Scheibe verschlossen ist.

Man kann einige oder alle in den Figuren 7 bis 9 ersichtlichen Verbindungsorgane 87, 97 der Halter 28, 29, 30, 31 durch Verbindungsorgane 101 und/oder 111 ersetzen. Das bzw. jedes Verbindungsorgan 111 kann dann beispielsweise durch die Verbindungsmittel 114 mit einem Halteorgan und durch die Befestigungsmittel 115 mit dem Fahrzeugboden oder ungekehrt verbunden werden. Der Fahrzeugboden 4 kann dann dementsprechend mit angeschweissten Gewindebuchsen oder Gewindebolzen oder dergleichen versehen werden. Des weiteren kann man Merkmale der Verbindungsorgane 87, 97, 101, 111 miteinander kombinieren und beispielsweise Verbindungsorgane vorsehen, die an einem Ende einen pilzförmigen Fortsatz aus Gummi und am anderen Ende eine Schraube oder Gewindebuchse oder an beiden Enden des Gummikörpers Gewindebbuchsen aufweisen. Ferner können Verbindungsorgane vorgesehen werden, die mindestens an einem Ende einen wie bei einer Blechschraube ausgebildeten Gewindeteil aufweisen oder zum Annieten oder Anschweissen ausgebildet sind. Zudem können die Gummikörper an mindestens einem Ende einen mehrkantförmigen Endabschnitt zum Angreifen mit einem Schlüssel aufweisen oder sogar im Querschnitt im wesentlichen vollständig die Form eines regelmässigen Polygons, etwa eines 6- oder 8-Ecks haben.

Die zwischen den beiden Auflage- und/oder Endflächen gemessene, axiale Abmessung des Hauptabschnitts 87a des vollständig aus Gummi bestehenden Verbindungsorgans 87 und der Gummikörper 102, 112 beträgt beispielsweise etwa 50% bis 150% des maximalen Durchmessers des betreffenden Gummikörpers. Der maximale Durchmesser beträgt bei einer Abgasanlage für einen Personenkraftwagen ferner vorzugsweise etwa 15 mm bis 50 mm. Die genannte axiale Abmessung kann dann etwa 10 mm bis 50 mm betragen.

Die zur Befestigung des ersten Schalldämpfers 19 dienenden Halter 28, 29 können durch Halter ersetzt werden, von denen einer in Fig. 12 sowie teilweise in Fig. 13 gezeichnet und mit 121 bezeichnet ist. Der Halter 121 weist als Hauptbestandteile ein unmittelbar am Gehäuse 45 des Schalldämpfers 19 angreifendes Halteorgan 122, ein am Fahrzeugboden 4 befestigtes Tragorgan 123 und zwei das letztere mit dem Halteorgan 122 verbindende Verbindungsorgan 125 auf. Das Halteorgan und das Tragorgan bestehen mindestens im wesentlichen aus einem metallischen Material, beispielsweise rostfreiem Stahl, während die Verbindungsorgane 125 mindestens zu einem grossen Teil aus gummielastischem Material bestehen und gleich oder ähnlich wie eines der vorher beschriebenen Verbindungsorgane 87, 97, 101, 111 ausgebildet sind. Das Halteorgan 122 besitzt eine den Mantel 47 des Schalldämpfers 19 umschliessende Bride 126 sowie einen bei deren Enden angeordneten Verschluss 127 und ist lösbar am Schalldämpfer-Gehäuse 45 befestigt. Das Tragorgan 123 besteht zum Beispiel aus einem mehrfach abgewinkelten Flachprofilstab oder U-Profilstab. Das Tragorgan 123 ist unterhalb des Schalldämpfers 19 angeordnet und auf einander abgewandten Seiten des letzteren mit Befestigungsmitteln 129 lösbar oder unlösbar am Fahrzeugboden 4 befestigt. Die Befestigungsmittel 129 weisen zum Beispiel Blechschrauben oder normale Metallschrauben auf, welche durch Löcher des Tragorgans 123 hindurch in den Fahrzeugboden 4 und/oder in an diesem angeschweisste Gewindebuchsen eingeschraubt sind. Die Schrauben könnten jedoch durch Rastelemente oder Nieten oder andere Befestigungsmittel ersetzt sein.

Jeder oder mindestens einer der Halter 28 bis 31 kann beispielsweise auch gemäss dem in der Fig. 14 und zum Teil in der Fig. 15 ersichtlichen Halter 131 ausgebildet sein. In der Fig. 14 sind analog wie in den Fig. 7 und 12 ein Ausschnitt des Fahrzeugbodens 4 und der Schalldämpfer 19 gezeichnet. Der Halter 131 weist ein am Schalldämpfer befestigtes Halteorgan 132, ein am Fahrzeugboden befestigtes Tragorgan 133 und zwei Verbindungsorgane 135 auf. Das Halteorgan 132 weist wiederum eine Bride 136 mit einem Verschluss 137 und zusätzlich zwei abgewinkelte Laschen 138 auf, deren eine Enden an der Bride befestigt sind und die von dieser wegragen. Das Tragorgan 133 besteht aus einem geraden U-Profilstab, dessen Enden mit Befestigungsmitteln 139 am Fahrzeugboden 4 befestigt sind. Die einen Gummikörper aufweisenden Verbindungsorgane 135 sind bei ihrem einen, oberen Ende an einer der Laschen 138 und bei ihrem anderen Ende am Tragorgan 133 befestigt.

Bei der in der Fig. 16 gezeichneten Variante des Fahrzeugbodens 4 ist dessen nach oben ragende Ausbuchtung weniger hoch als in der Fig. 7, so dass ein Querschnitts-bereich des Schalldämpfers 19 unten aus der von der Ausbuchtung begrenzten Tunnel herausragt. Der in der Fig. 16 gezeichnete Halter 141 besitzt ein Halteorgan 142 und zwei Verbindungsorgane 145. Das Halteorgan 142 weist eine den Schalldämpfer 19 umschliessende Bride 146 und einen mehrfach abgewinkelten Flach- oder U-Profilstab 147 auf. Der mittlere Abschnitt des Profilstabs 147 ist entsprechend der Anordnung des Schalldämpfers nach unten ausgebuchtet und auf beiden Seiten der Ausbuchtung an der Bride befestigt. Die Verbindungsorgane 145 sind in der Nähe der Enden des Profilstabs 142 angeordnet und verbinden diesen mit dem Fahrzeugboden 4.

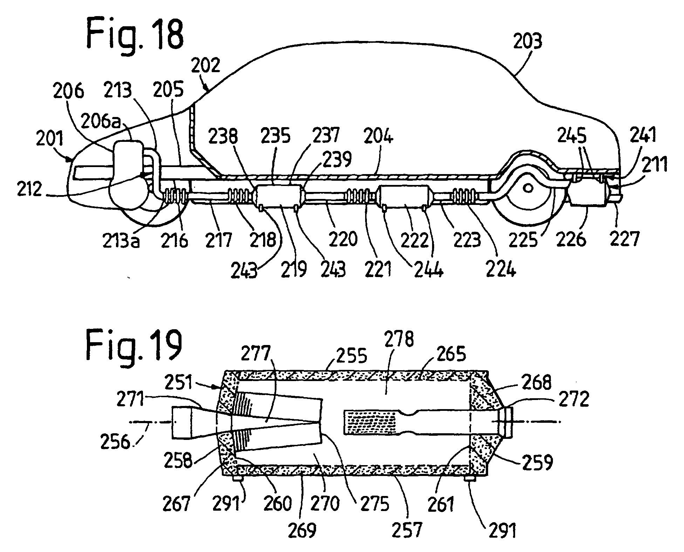

Der in der Fig. 17 gezeichnete Ausschnitt aus dem Fahrzeugboden 4 hat eine Kehle und/oder einen asymmetrischen, nach unten offenen Tunnel, in der bzw. dem sich der Schalldämpfer 19 mindestens zum Teil befindet. Der in der Fig. 17 ersichtliche Halter 151 besitzt ein Halteorgan 152 mit einer den Schalldämpfer umschliessenden Bride und einen an dieser befestigten, mehrfach abgewinkelten und/oder abgebogenen Stab, dessen Enden durch Verbindungsorgane 155 mit dem Fahrzeugboden 4 verbunden sind.

Soweit vorgängig nichts anderes geschrieben wurde, sind die in den Figuren 12 bis 17 ersichtlichen Halter ähnlich ausgebildet, wie der anhand der Figuren 7 und 8 beschriebenen Halter 28 und besitzen Verbindungsorgane, die einem der Verbindungsorgane 87, 97, 101, 111 gleich oder ähnlich sind.

Das in Fig. 18 ersichtliche Kraftfahrzeug 201, besteht wieder aus einem Personenkraftwagen, besitzt einen Fahrzeugkörper 202 mit einer Karosserie 203, einem Fahrzeugboden 204 sowie einem Gestell 205, einen Verbrennungsmotor 206 mit einem Motorgehäuse 206a und eine Abgasanlage 211 mit einem Auspuff 212. Dieser weist - beginnend beim Motor - entlang dem Abgas-Strömungsweg der Reihe nach eine Einlass- und Sammelvorrichtung 213 mit einem Auspuffkrümmer und einem gemeinsamen Ausgang 213a, ein erstes elastisch deformierbares Leitungselement 216, ein starres Rohr 217,ein zweites elastisch deformierbares Leitungselement 218, einen Katalysator 219, ein Rohr 220, ein drittes elastisch deformierbares Leitungselement 221, einen ersten Schalldämpfer 222, ein Rohr 223, ein viertes elastisch deformierbares Leitungselement 224, ein Rohr 225, einen zweiten Schalldämpfer 226 und ein Auslassrohr 227 auf. Der Katalysator 219 ist also stromabwärts von den elastisch deformierbaren Leitungselementen 216, 218 angeordnet und befindet sich unterhalb des Fahrzeugbodens 204. Der Katalysator 219 ist länglich und hat eine ungefähr zur Längsrichtung des Kraftfahrzeugs parallele Achse und ein Gehäuse 235 mit einem Mantel 237 und zwei Endwänden 238, 239. Der Mantel 237 hat im Querschnitt beispielsweise die Form eines abgeflachten Ovals oder eines Kreises. Die Endwände 238, 239 sind beispielsweise mindestens teilweise konisch und/oder gewölbt sowie gegen die Achse geneigt. Das Gehäuse 235 enthält Katalysatormittel zur katalytischen Reinigung des Abgases. Der Mantel und die Endwände der Gehäuse des Katalysators 219 können ähnlich kleine Wanddicken haben, wie es weiter vorne für die Schalldämpfer-Gehäuse des Auspuffs 12 angegeben wurde. Das Katalysator-Gehäuse 235 kann eventuell schallabsorbierende und wärmeisolierende Faser-Materialien enthalten, die analog angeordnet sind wie ih den Schalldämpfern des zuerst beschriebenen Auspuffs 12.

Die Abgasanlage 211 besitzt noch Haltemittel 241, welche die Gehäuse des Katalysators und der beiden Schalldämpfer am Fahrzeugboden 204 halten. Die Haltemittel weisen zwei Halter 243 zum Halten des Katalysator-Gehäuses 235 und je zwei Halter 244, 245 zum Halten der Gehäuse der Schalldämpfer 222 bzw. 226 auf. Die Halter 243, 244, 245 sind gleich oder ähnlich ausgebildet wie die vorgängig beschriebenen Halter und weisen insbesondere je zwei Verbindungsorgane auf, die ganz oder teilweise aus einem Gummikörper bestehen. Soweit vorgängig nichts anderes geschrieben wurde, kann die Abgasanlage 211 gleich oder ähnlich ausgebildet sein wie die Abgasanlage 11.

Die in Fig. 19 ersichtliche Vorrichtung 251 bildet einen kombinierten Katalysator-Schalldämpfer und weist ein längliches Gehäuse 255 mit einer Achse 256, einen Mantel 257 und zwei Endwänden 258, 259 auf. Das Gehäuse 255 enthält beispielsweise ähnlich wie die Schalldämpfer-Gehäuse des Auspuffs 12 zwei gasdurchlässige Zwischenwände 260, 261, einen gasdurchlässigen Innenmantel 265 sowie wärmeisolierende und schallabsorbierende Faser-Materialien 267, 268, 269. Der Mantel 257, die Endwände 258, 259, die Zwischenwände 260, 261 und der Innenmantel 265 können ähnlich ausgebildet sein und ähnliche Wanddicken haben wie bei den Schalldämpfern des Auspuffs 12.

Die Zwischenwände und der Innenmantel begrenzen einen hohlen Innenraum 270. Das Gehäuse 255 ist bei seinen Endwänden mit einem Einlass 271 sowie einem Auslass 272 versehen und enthält Katalysatormittel 275. Diese unterteilen den Innenraum 270 in einen ersten, inneren Innenraumbereich 277 sowie einen zweiten, äusseren Innenraumbereich 278. Der Einlass 271 mündet bei der Zwischenwand 260 in den ersten Innenraumbereich 277. Der Auslass 272 ist durch ein Rohr gebildet, das in den zweiten Innenraumbereich 278 hineinragt und beispielsweise ähnlich ausgebildet ist wie das in Fig. 3 ersichtliche Rohr 54 des Schalldämpfers 19. Die Katalysatormittel 275 dienen zur katalytischen Reinigung des Abgases und besitzen eine Vielzahl von Durchgängen, die den ersten mit dem zweiten Innenraumbereich verbinden. Die Katalysatormittel 275 können beispielsweise zwei V-förmig angeordnete Katalysatorkörper aufweisen und ähnlich ausgebildet sein, wie es aus der US 5 593 645 A und der entsprechenden EP 0 676 535 A bekannt ist. Der Inhalt dieser Publikationen wird hiermit in diese Anmeldung einbezogen, soweit sich keine Widersprüche ergeben. Das Gehäuse 255 ist mit zwei Haltern 291 am Fahrzeugboden gehalten. Die Halter 291 können ähnlich ausgebildet werden, wie die vorgängig beschriebenen Halter der Schalldämpfer.

Die sowohl zur katalytischen Abgasreinigung als auch zur Schalldämpfung dienende Vorrichtung 251 kann beispielsweise anstelle des ersten Schalldämpfers 19 in den in Fig. 1 ersichtlichen Auspuff 12 eingebaut werden. Der Katalysator 14 des Auspuffs 12 dient dann nur noch als Vor- und/oder Start-Katalysator und kann relativ klein bemessen werden. Die Vorrichtung 251 kann auch den Katalysator 219 und den ersten Schalldämpfer 222 des in Fig. 18 gezeichneten Auspuffs 212 ersetzen.

Das Kraftfahrzeug und dessen Abgasanlage können noch auf verschiedene Weisen geändert werden.

Man kann insbesondere auch Merkmale von verschiedenen Ausführungsbeispielen miteinander kombinieren. Man kann beipielsweise bei dem in Fig. 18 gezeichneten Auspuff 212 noch einen Vor- und/oder Start-Katalysator vorsehen, der analog wie der Katalysator 14 in Fig. 1 starr mit der Einlass- und Sammelvorrichtung 213 verbunden und stromaufwärts vom ersten elastisch deformierbaren Leitungselement angeordnet ist.

Falls ein Kraftfahrzeug eine Abgasanlage mit mehr als einem Auspuff besitzt, kann jeder Auspuff mit einigen Zylindern des Verbrennungmotors des Fahrzeugs verbunden und im übrigen in der beschriebenen Weise ausgebildet sein. Wenn der Motor aus einem Dieselmotor besteht, kann der Katalysator weggelassen werden. Ferner kann der Auspuff eventuell nur einen einzigen Schalldämpfer aufweisen.

Eventuell kann man bei dem in den Figuren 1 und 18 ersichtlichen Auspuff 12 bzw. 212 eines der beiden elastisch deformierbaren Leitungselemente 16 und 18 bzw. 216 und 218 weglassen.

Wenn das Kraftfahrzeug aus einem Lastkraftwagen oder Bus oder dergleichen besteht, können die Rohre und Schalldämpfer grössere Durchmesser als bei einem Personenkraftwagen haben. Die Wanddicken der Rohre, der der stromabwärts von mindestens einem elastisch deformierbaren Leitungselement angeordneten und am Fahrzeugkörper gehaltenen Katalysator- und/oder Schalldämpfer-Gehäuse und der Zwischenwände sowie Innenmäntel können jedoch trotzdem zum Beispiel nur ungefähr 0,5 mm oder wenig mehr betragen. Ferner können die Halter dann eventuell mindestens zum Teil am Gestell statt am Fahrzeugboden des Kraftfahrzeugs befestigt werden.

Des weiteren können die Schalldämpfer oder mindestens einer von ihnen ein Gehäuse haben, dessen Mantel im Querschnitt statt kreisförmig beispielsweise ungefähr oval ist.

## Patentansprüche

1. Abgasanlage für ein einen Fahrzeugkörper (2, 202) und einen Verbrennungsmotor (6, 206) aufweisendes, eine Längsrichtung definierendes Kraftfahrzeug (1, 201), mit einem mit dem Verbrennungsmotor (6, 206) verbindbaren Auspuff (12, 212) und mit Haltemitteln (27,241) zum Halten des Auspuffs (12, 212) am Fahrzeugkörper (2, 202), wobei der Auspuff (12, 212) mindestens ein deformierbares Leitungselement (16, 18, 21, 216, 218, 221, 224), mindestens ein stromabwärts von diesem angeordnetes Rohr (17, 20, 22, 24, 217, 220, 223, 225, 227) und mindestens einen stromabwärts des deformierbaren Leitungselements (16, 18, 21, 216, 218, 221, 224) angeordneten Schalldämpfers (19, 23, 222, 226, 251) mit einem Gehäuse (45, 65, 255) mit zwei Enden aufweist, **dadurch gekennzeichnet, dass** das bzw. mindestens ein stromabwärts vom deformierbaren Leitungselement (16, 18, 21, 216, 218, 221, 224) angeordnetes Rohr (17, 20, 22, 24, 217, 220, 223, 225, 227) im Wesentlichen eine höchstens 1 mm betragende Wanddicke hat, dass ein metallischer Mantel (47, 67, 257) von dem bzw. jedem stromabwärts des genannten Leitungselements (16, 18, 21, 216, 218, 221, 224) angeordneten Gehäuse (45, 65, 255) eines Schalldämpfers (19, 23, 222, 226, 251) eine im Wesentlichen höchstens 1 mm betragende Wanddicke aufweist und dass die Haltemittel (27, 241) für das bzw. jedes genannte Gehäuse (45, 65, 255) zwei Halter (28, 29, 30, 31, 121, 131, 141, 151, 161, 243, 244, 245, 291) aufweisen, von denen jeder in der Nähe von einem der beiden Enden des Gehäuses (45, 65, 235, 255) angeordnet ist und zwei voneinander in Abstand stehende Verbindungsorgane (87, 97, 101, 111, 125, 135, 145, 155) mit je einem Gummikörper (102, 112) aufweist.

2. Abgasanlage nach Anspruch 1, **dadurch gekennzeichnet, dass** die genannte Wanddicke des mindestens einen Rohrs (17, 20, 22, 24, 217, 220, 223, 225, 227) im Wesentlichen höchstens 0,8 mm beträgt.

3. Abgasanlage nach Anspruch 1 oder 2, **dadurch gekennzeichnet, dass** der Auspuff (12, 212) entlang der Abgas-Strömung einen ersten Schalldämpfer (19, 222, 251), einen zweiten Schalldämpfer (23, 226) und mindestens ein zwischen den beiden Schalldämpfern (19, 23, 222, 226, 251) angeordnetes Rohr (20, 22, 223, 225) aufweist und dass mindestens ein stromaufwärts des ersten Schalldämpfers (19, 222, 251) angeordnetes Rohr (15, 17) und das bzw. jedes zwischen den beiden Schalldämpfern (19, 23, 222, 226, 251) angeordnete Rohr (20, 22, 223, 225) eine Wanddicke hat, die höchstens gleich dem genannten Wert ist.

4. Abgasanlage nach einem der Ansprüche 1 bis 3, **dadurch gekennzeichnet, dass** die Wanddicke des metallischen Mantels (47, 67, 257) des bzw. jedes genannten Gehäuses (45, 65, 255) eines Schalldämpfers (19, 23, 222, 226, 251) im Wesentlichen höchstens 0,8mm beträgt.

5. Abgasanlage nacheinem der Ansprüche 1 bis 4, **dadurch gekennzeichnet, dass** in mindestens einem zu einem Schalldämpfer (19, 23, 222, 226, 251) gehörenden Gehäuse (45, 65, 235, 255) schallabsorbierendes und wärmeisolierendes Material (59, 79, 269) zwischen dem Mantel (47, 67, 257) und einem hohlen Innenraum (60, 80, 270) vorhanden ist und dass dieses Material (59, 79, 269) mindestens 10 mm dick ist.

6. Abgasanlage nach Anspruch 4 oder 5, **dadurch gekennzeichnet, dass** das Gehäuse (45, 65, 255) des bzw. mindestens eines Schalldämpfers (19, 23, 222, 226, 251) zwei Endwände (48, 49, 68, 69, 258, 259) aufweist, deren Wanddicken im wesentlichen höchstens 1 mm und vorzugsweise höchstens 0,8 mm betragen.

7. Abgasanlage nach Anspruch 6, **dadurch gekennzeichnet, dass** das Gehäuse (45, 65, 235, 255) des bzw. mindestens eines Schalldämpfers (19, 23, 222, 226, 251) zwischen den Endwänden (48, 49, 68, 69, 258, 259) und dem hohlen Innenraum (60, 80, 270) schallabsorbierendes und wärmeisolierendes Material (57, 58, 77, 78) enthält, das mindestens 10 mm und vorzugsweise mindestens 20 mm dick ist.

8. Abgasanlage nach Anspruch 5 und 7, **dadurch gekennzeichnet, dass** das schallabsorbierende und wärmeisolierende Material (57, 58, 59, 77, 78, 79, 267, 268, 269) aus mineralischen Fasern, zum Beispiel aus Basaltwolle und/oder Steinwolle und/oder Glaswolle, besteht und dass das Gehäuse (45, 65, 255) des bzw. mindestens eines Schalldämpfers (19, 23, 222, 226, 251) einen mindestens stellenweise gasdurchlässigen Innenmantel (55, 75, 265) und zwei mindestens stellenweise gasdurchlässige Zwischenwände (50, 51, 70, 71, 260, 261) enthält und dass der Innenmantel (55, 75, 265) und die Zwischenwände (50, 51, 70, 71, 260, 261) zusammen mit dem Mantel (57, 67, 257) und den Endwänden (48, 49, 68, 69, 258, 259) Zwischenräume begrenzen, in denen das schallabsorbierende und wärmeisolierende Material (57, 58, 59, 77, 78, 79, 267, 268, 269) angeordnet ist, wobei der Innenmantel (55, 75, 265) und die Zwischenwände (50, 51, 70, 71, 260, 261) Wanddicken haben, die im wesentlichen höchstens 1 mm und beispielsweise im wesentlichen höchstens 0,8 mm betragen.

9. Abgasanlage nach einem der Ansprüche 1 bis 8, **dadurch gekennzeichnet, dass** der Auspuff (12, 212) mindestens ein stromabwärts des genannten Leitungselements (216, 218) angeordnetes, Katalysatormittel (275) enthaltendes Gehäuse (235, 255) aufweist, das einen Mantel (257) mit einer Wanddicke hat, die im wesentlichen höchstens 1 mm und vorzugsweise im wesentlichen höchstens 0,8 mm beträgt.

10. Abgasanlage nach einem der Ansprüche 1 bis 9, **dadurch gekennzeichnet, dass** die Haltemittel (27, 241) für das bzw. jedes Gehäuse (45, 65, 235, 255) mindestens einen Halter (28, 29, 30, 31, 121, 131, 141, 151, 161, 243, 244, 245, 291) aufweisen, der direkt mit dem Gehäuse (45, 65, 235, 255) verbunden ist.

11. Abgasanlage nach einem der Ansprüche 1 bis 10,
**dadurch gekennzeichnet, dass** der Auspuff (12, 212) zwei deformierbare Leitungselemente (16, 18, 216, 218) aufweist, die stromaufwärts von dem bzw. dem ersten genannten Gehäuse (45, 235) angeordnet und durch ein Rohr (17, 217) miteinander verbunden sind, dessen Wanddicke im Wesentlichen höchstens gleich der genannten maximalen Wanddicke des mindestens einen Rohrs (17, 20, 22, 24, 217, 220, 223, 225, 227) ist.

12. Abgasanlage nach einem der Ansprüche 1 bis 11, **dadurch gekennzeichnet, dass** der Gummikörper (102, 112) jedes Verbindungsorgan (87, 97, 101, 111, 125, 135, 145, 155) aus synthetischem und/oder natürlichem Gummi besteht und dass die dem bzw. demselben Gehäuse (45, 65, 265) zugeordneten Verbindungsorgane (87, 97, 101, 111, 125, 135, 145, 155, 165) in einer Projektion auf eine Ebene, auf der das Kraftfahrzeug (1, 201 steht, ein Viereck definieren.

13. Abgasanlage nach einem der Ansprüche 1 bis 12, **dadurch gekennzeichnet, dass** das bzw. jedes Gehäuse (45, 65, 235, 255) eine Achse (46, 66, 256) definiert, und dass die zwei zum gleichen Halter (28, 29, 30, 31, 121, 131, 141, 151, 161, 243, 244, 245, 291) gehörenden Verbindungsorgane (87, 97, 101, 111, 125, 135, 145, 155) rechtwinklig zur Achse (46, 66, 256) voneinander in Abstand stehen.

14. Abgasanlage nach einem der Ansprüche 1 bis 13, **dadurch gekennzeichnet, dass** jedes Verbindungsorgan (87, 97, 101, 111, 125, 135, 145, 155, 165) mit dem Gehäuse (45, 65, 235, 255) verbundene Verbindungsmittel (87b, 104, 114) und zum Verbinden mit dem Fahrzeugkörper (2, 202) bestimmte Verbindungsmittel (87c, 104, 115) aufweist.

15. Abgasanlage nach Anspruch 14, **dadurch gekennzeichnet, dass** der Gummikörper (102, 112) zwischen den Verbindungsmitteln (87b, 87c, 104, 114, 115) im wesentlichen im Querschnitt voll ist.

16. Abgasanlage nach einem der Ansprüche 1 bis 15, **dadurch gekennzeichnet, dass** der Gummikörper (102, 112) jedes Verbindungsorgan (87, 97, 101, 111, 125, 135, 145, 155) im Wesentlichen rotationssymmetrisch zu einer Achse ist und/oder im Querschnitt im Wesentlichen ein regelmässiges Polygon bildet.

17. Abgasanlage nach einem der Ansprüche 1 bis 16, **dadurch gekennzeichnet, dass** der Gummikörper (102, 112) jedes Verbindungsorgan (87, 97, 101, 111, 125, 135, 145, 155) zwei einander abgewandte Auflageflächen aufweist und dass eine von Auflagefläche zu Auflagefläche gemessene, axiale Abmessung des Hauptabschnitts (87a) oder Körpers (102, 112) 50 % bis 150 % des maximalen Durchmesser des Gummikörpers (102, 112) beträgt.

18. Abgasanlage nach einem der Ansprüche 1 bis 17, **dadurch gekennzeichnet, dass** das stromaufwärts des bzw. des entlang dem Auspuff (12, 212) in der Abgas-Strömungsrichtung ersten Gehäuses (45, 235, 265) angeordnete, deformierbare Leitungselement ausgebildet ist oder dass die stromaufwärts des bzw. des entlang dem Auspuff (12, 212) in der Abgas-Strömungsrichtung ersten Gehäuses (45, 235, 265) angeordneten, deformierbaren Leitungselemente (16, 18, 216, 218) ausgebildet sind, um Längenänderungen bis mindestens 5 mm und beispielsweise bis mindestens 10 mm von mindestens einem festen, sich stromaufwärts des bzw. des ersten Gehäuses (45, 235, 265) befindenden Teil des Auspuffs (12, 212) auszugleichen.

19. Abgasanlage nach einem der Ansprüche 1 bis 18, **dadurch gekennzeichnet, dass** der Auspuff (12) mindestens zwei Schalldämpfer (19, 23) und zwischen diesen mindestens ein Rohr (20, 22) und mindestens ein deformierbares Leitungselement (21) aufweist, das eine um mindestens 5 mm und beispielsweise mindestens 10 mm veränderbare Länge hat.

20. Abgasanlage nach einem der Ansprüche 1 bis 19,
**dadurch gekennzeichnet, dass** das bzw. jedes deformierbare Leitungselement (16, 18, 21, 216, 218, 221, 224) einen Wellenbalg (33) aufweist und den ganzen stromabwärts von ihm angeordneten Teil des Auspuffs (12, 212) schwingungsmässig vom Verbrennungsmotor (6, 206) entkoppelt.

21. Abgasanlage nach einem der Ansprüche 1 bis 20 **dadurch gekennzeichnet, dass** die Haltemittel (27, 241) ausgebildet sind, um das bzw. mindestens das erste entlang dem Ausspuff (12, 212) in der Abgas-Strömungsrichtung auf das erste deformierbare Leitungselement (16, 216) folgende Gehäuse (45, 235, 255) derart am Fahrzeugkörper (2, 202) zu halten, dass dieses Gehäuse (45, 235) unter der Einwirkung einer konstanten Beschleunigung von 10 m/s² oder einer konstanten Kraft von 100 N in irgend einer zur Längsrichtung des Kraftfahrzeuges (1, 201) rechtwinkligen Richtung höchstens 5 mm ausgelenkt wird.

22. Abgasanlage nach einem der Ansprüche 1 bis 21, **dadurch gekennzeichnet, dass** die Haltemittel (27, 241) ausgebildet sind, um das bzw. mindestens das erste entlang dem Auspuff in der Abgas-Strömungsrichtung auf das erste genannte Leitungselement (16, 216) folgende Gehäuse (45, 235, 255) derart am Fahrzeugkörper (2, 202) zu halten, dass dieses Gehäuse (45, 235, 255) unter der Einwirkung einer konstanten Beschleunigung von 10 m/s² oder einer konstanten Kraft von 100 N in allen beliebigen Richtungen höchstens 5 mm ausgelenkt wird.

23. Abgasanlage nach einem der Ansprüche 1 bis 22, **dadurch gekennzeichnet dass** die Haltemittel (27, 241) ausgebildet sind, um das bzw. mindestens das erste entlang dem Auspuff (12, 212) in der Abgas-Strömungsrichtung auf das erste genannte Leitungselement (16, 216) folgende Gehäuse (45, 235, 255) derart am Fahrzeugkörper (2, 202) zu halten, dass dieses Gehäuse (45, 235, 255) unter der Einwirkung einer konstanten Beschleunigung von 10 m/s² oder einer konstanten Kraft von 100 N in allen beliebigen Richtungen höchstens 2 mm ausgelenkt wird.

24. Abgasanlage nach einem der Ansprüche 1 bis 23, **dadurch gekennzeichnet, dass** die Haltemittel (27, 241) ausgebildet sind, um das bzw. mindestens das erste entlang dem Auspuff (12, 212) in der Abgas-Strömungsrichtung auf das erste genannte Leitungselement (16, 216) folgende Gehäuse (45, 235, 255) derart am Fahrzeugkörper (2, 202) zu halten, dass dieses Gehäuse (45, 235, 255) in von den restlichen Teilen des Auspuffs (12, 212) getrennten Zustand durch eine konstante Beschleunigung oder eine konstante Kraft mit der genannten Grösse und beliebiger Richtung höchstens 5 mm und vorzugsweise höchstens 2 mm ausgelenkt wird.

25. Abgasanlage nach einem der Ansprüche 1 bis 24, **dadurch gekennzeichnet, dass** die Haltemittel (27, 241) ausgebildet sind, um das Gehäuse (45, 65, 255) des bzw. mindestens eines Schalldämpfers (19, 23, 122) derart am Fahrzeugkörper (2, 202) zu halten, dass dieses Gehäuse (45, 65 255) beim normalen Betrieb des Kraftfahrzeugs (1, 201) in allen Richtungen höchstens 2 mm und zum Beispiel höchstens 0,5 mm aus einer Ruhelage ausgelenkt wird.

26. Abgasanlage nach einem der Ansprüche 1 bis 25, **dadurch gekennzeichnet, dass** der Auspuff (12, 212) einen Katalysator (14, 219) aufweist, dass das bzw. mindestens ein deformierbares Leitungselement (16, 18, 21, 221, 224), das bzw. mindestens ein Rohr (17, 20, 22, 24, 223, 225, 227) mit der genannten Wanddicke und das bzw. jedes Gehäuse (45, 65) eines Schalldämpfers (19, 23, 222, 226) mit einem die genannte Wanddicke aufweisenden Mantel (47, 67) stromabwärts vom Katalysator (14, 219) angeordnet sind.

27. Kraftfahrzeug mit einem Fahrzeugkörper (2, 202), einem Verbrennungsmotor (6, 206) und einer Abgasanlage (11, 211) nach einem der Ansprüche 1 bis 26, **dadurch gekennzeichnet, dass** der Auspuff (12, 212) der Abgasanlage (11, 211) mit dem Verbrennungsmotor (6, 206) verbunden ist und dass das bzw. jedes Gehäuse (45, 65, 235, 255) durch die Haltemittel (27, 241) am Fahrzeugkörper (2, 202) gehalten ist.

## Claims

1. Exhaust system for a motor vehicle (1, 201) having a vehicle body (2, 202) and an internal combustion engine (6, 206) and defining a longitudinal direction, said exhaust system comprising an exhaust (12, 212) which can be connected to the internal combustion engine (6, 206), and comprising retaining means (27, 241) for holding the exhaust (12, 212) on the vehicle body (2, 202), the exhaust (12, 212) having at least one deformable line member (16, 18, 21, 216, 218, 221, 224), at least one pipe (17, 20, 22, 24, 217, 220, 223, 225, 227) arranged downstream thereof and at least one silencer (19, 23, 222, 226, 251) arranged downstream of the deformable line member (16, 18, 21, 216, 218, 221, 224) and having a housing (45, 65, 255) with two ends, **characterized in that** the or at least one pipe (17, 20, 22, 24, 217, 220, 223, 225, 227) arranged downstream of the deformable line member (16, 18, 21, 216, 218, 221, 224) has substantially a wall thickness of not more than 1 mm, that a metallic casing (47, 61, 257) of the or each housing (45, 65, 255) of a silencer (19, 23, 222, 226, 251), which housing (45, 65, 255) is arranged downstream of said line member (16, 18, 21, 216, 218, 221, 224), has a wall thickness substantially of not more than 1 mm, and that the retaining means (27, 241) of the or each said housing (45, 65, 255) have two holders (28, 29, 30, 31, 121, 131, 141, 151, 161, 243, 244, 245, 291), each of which is arranged in the vicinity of one of the two ends of the housing (45, 65, 235, 355) and has two connecting members (87, 97, 101, 111, 125, 135, 145, 155) a distance apart and each comprising a rubber member (102, 112).

2. Exhaust system according to Claim 1, **characterized in that** said wall thickness of the at least one pipe (17, 20, 22, 24, 217, 220, 223, 225, 227) is substantially at most 0.8 mm.

3. Exhaust system according to Claim 1 or 2, **characterized in that** the exhaust (12, 212) has, along the exhaust gas flow, a first silencer (19, 222, 251), a second silencer (23, 226) and at least one pipe (20, 22, 22, 223, 225) arranged between the two silencers (19, 23, 222, 226, 261), and that at least one pipe (15, 17) arranged upstream of the first silencer (19, 222, 251) and the or each pipe (20, 22, 223, 225) arranged between the two silencers (19, 23, 222, 226, 251) have a wall thickness which is at most equal to said value.

4. Exhaust system according to any of Claims 1 to 3, **characterized in that** the wall thickness of the metallic casing (47, 67, 257) of the or each said housing (45, 65, 255) of a silencer (19, 23, 222, 226, 251) is substantially at most 0.8 mm.

5. Exhaust system according to any of Claims 1 to 4, **characterized in that** sound-absorbing and heat-insulating material (59, 79, 269) is present between the casing (47, 67, 257) and a hollow interior (60, 80, 270) in at least one housing (45, 65, 235, 255) belonging to a silencer (19, 23, 222, 226, 251) and that this material (59, 79, 269) is at least 10 mm thick.

6. Exhaust system according to Claim 4 or 5, **characterized in that** the housing (45, 65, 255) of the or at least one silencer (19, 23, 222, 226, 251) has two end walls (48, 49, 68, 69, 258, 259), the wall thicknesses of which are substantially at most 1 mm and preferably at most 0.8 mm.

7. Exhaust system according to Claim 6, **characterized in that** the housing (45, 65, 235, 255) of the or at least one silencer (19, 23, 222, 226, 251) contains, between the end walls (48, 49, 68, 69, 258, 259) and the hollow interior (60, 80, 270), sound-absorbing and heat-insulating material (57, 58, 77, 78) which is at least 10 mm and preferably at least 20 mm thick.

8. Exhaust system according to Claims 5 and 7, **characterized in that** the sound-absorbing and heat-insulating material (57, 58, 59, 77, 78, 79, 267, 268, 269) comprises mineral fibres, for example basalt wool and/or rockwool and/or glass wool and that the housing (45, 65, 255) of the or at least one silencer (19, 23, 222, 226, 251) contains an inner casing (55, 75, 265) which is gas-permeable at least in parts and two intermediate walls (50, 51, 70, 71, 260, 261) which are gas-permeable at least in parts and that the inner casing (55, 75, 265) and the intermediate walls (50, 51, 70, 71, 260, 261) together with the casing (57, 67, 257) and the end walls (48, 49, 68, 69, 258, 259) bound intermediate spaces in which the sound-absorbing and heat-insulating material (57, 58, 59, 77, 78, 79, 267, 268, 269) is arranged, the inner casing (55, 75, 265) and the intermediate walls (50, 51, 70, 71, 260, 261) having wall thicknesses which are substantially at most 1 mm and, for example, substantially at most 0.8 mm.

9. Exhaust system according to any of Claims 1 to 8, **characterized in that** the exhaust (12, 212) has at least one housing (235, 255) which is arranged downstream of said line member (216, 218), contains catalyst means (275) and has a casing (257) with a wall thickness which is substantially at most 1 mm and preferably substantially at most 0.8 mm.

10. Exhaust system according to any of Claims 1 to 9, **characterized in that** the retaining means (27, 251) for the or each housing (45, 65, 235, 265) have at least one holder (28, 29, 30, 31, 121, 131, 141, 151, 161, 243, 244, 245, 291) which is connected directly to the housing (45, 65, 235, 255).

11. Exhaust system according to any of Claims 1 to 10, **characterized in that** the exhaust (12, 212) has two deformable line members (16, 18, 216, 218) which are arranged upstream the or the first said housing (45, 235) and are connected to one another by a pipe (17, 217), the wall thickness of which is substantially at most equal to said maximum wall thickness of the at least one pipe (17, 20, 22, 24, 217, 220, 223, 225, 227).

12. Exhaust system according to any of Claims 1 to 11, **characterized in that** the rubber member (102, 112) of each connecting member (87, 97, 101, 111, 125, 135, 145, 155) consists of synthetic and/or natural rubber and that the connecting members (87, 97, 101, 111, 125, 135, 145, 155, 165) coordinated with the or the same housing (45, 65, 265) define a rectangle in a projection onto a plane on which the motor vehicle (1, 201) stands.

13. Exhaust system according to any of Claims 1 to 12, **characterized in that** the or each housing (45, 65, 235, 255) defines an axis (46, 66, 256) and that the two connecting members (87, 97, 101, 111, 125, 135, 145, 155) belonging to the same holder (28, 29, 30, 31, 121, 131, 141, 151, 161, 243, 244, 245, 291) are at right angles to the axis (46, 66, 256) and a distance apart.

14. Exhaust system according to any of Claims 1 to 13, **characterized in that** each connecting member (87, 97, 101, 111, 125, 135, 145, 155, 165) has connecting means (87b, 104, 114) connected to the housing (45, 65, 235, 255) and connecting means (87c, 104, 115) intended for connection to the vehicle body (2, 202).

15. Exhaust system according to Claim 14, **characterized in that** the rubber member (102, 112) between the connecting means (87b, 87c, 104, 114, 115) is substantially solid in cross-section.

16. Exhaust system according to any of Claims 1 to 15, **characterized in that** the rubber member (102, 112) of each connecting member (87, 97, 101, 111, 125, 135, 145, 155) is substantially rotationally symmetrical with respect to an axis and/or forms substantially a regular polygon in cross-section.

17. Exhaust system according to any of Claims 1 to 16, **characterized in that** the rubber member (102, 112) of each connecting member (87, 97, 101, 111, 125, 135, 145, 155) has two support surfaces facing away from one another and that an axial dimension of the main section (87a) or member (102, 112), measured from support surface to support surface, is 50% to 150% of the maximum diameter of the rubber member (102, W12)

18. Exhaust system according to any of Claims 1 to 17, **characterized in that** the deformable line member arranged upstream of the housing (45, 235, 265) or of the first housing (45, 235, 265) along the exhaust (12, 212) in the direction of flow of the exhaust gas is formed, or that the deformable line members (16, 18, 216, 218) arranged upstream of the housing (45, 235, 265) or of the first housing (45, 235, 265) along the exhaust (12, 212) in the direction of flow of the exhaust gas, are formed in order to compensate changes in length up to at least 5 mm and, for example, up to at least 10 mm of at least one fixed part of the exhaust (12, 212), which part is present upstream of the or the first housing (45, 235, 265).

19. Exhaust system according to any of Claims 1 to 18, **characterized in that** the exhaust (12) has at least two silencers (19, 23) and, between these, at least one pipe (20, 22) and at least one deformable line member (21) which has a length variable by at least 5 mm and, for example, at least 10 mm.

20. Exhaust system according to any of Claims 1 to 19, **characterized in that** the or each deformable line member (16, 18, 21, 216, 218, 221, 224) has a bellows (33) and that entire part of the exhaust (12, 212) which is arranged downstream of it is decoupled from the internal combustion engine (6, 206) with respect to vibrations.

21. Exhaust system according to any of Claims 1 to 20, **characterized in that** the retaining means (27, 241) are formed for holding the housing (45, 235, 255) or at least the first housing (45, 235, 255) following the first deformable line member (16, 216) along the exhaust (12, 212) in the direction of flow of the exhaust gas on the vehicle body (2, 202) in such a way that this housing (45, 235) is deflected at most 5 mm in any direction perpendicular to the longitudinal direction of the motor vehicle (1, 101) under the action of constant acceleration of 10 m/s² or of a constant force of 100 N.

22. Exhaust system according to any of Claims 1 to 21, **characterized in that** the retaining means (27, 241) are formed for holding the housing (45, 235, 255) or at least the first housing (45, 235, 255) following first said line member (16, 216) along the exhaust in the direction of flow of the exhaust gas on the vehicle body (2, 202) in such a way that this housing (45, 235, 255) is deflected at most 5 mm in any direction under the action of a constant acceleration of 10 m/s² or of a constant force of 100 N.

23. Exhaust system according to any of Claims 1 to 22, **characterized in that** the retaining means (27, 241) are formed for holding the housing (45, 235, 255) or at least the first housing (45, 235, 255) following first said line member (16, 216) along the exhaust (12, 212) in the direction of flow of the exhaust gas on the vehicle body (2, 202) in such a way that this housing (45, 235, 255) is deflected at most 2 mm in any direction under the action of a constant acceleration of 10 m/s² or of a constant force of 100 N.

24. Exhaust system according to any of Claims 1 to 23, **characterized in that** the retaining means (27, 241) are formed for holding the housing (45, 235, 255) or at least the first housing (45, 235, 255) following first said line member (16, 216) along the exhaust (12, 212) in the direction of flow of the exhaust gas on the vehicle body (2, 202) in such a way that this housing (45, 235, 255), in the state separated from the remaining parts of the exhaust (12, 212), is deflected at most 5 mm and preferably at most 2 mm by a constant acceleration or a constant force having said magnitude and any direction.

25. Exhaust system according to any of Claims 1 to 24, **characterized in that** the retaining means (27, 241) are formed for holding the housing (45, 65, 255) of the or at least one silencer (19, 23, 122) on the vehicle body (2, 202) in such a way that this housing (45, 65, 255), during normal operation of the motor vehicle (1, 201), is deflected at most 2 mm and, for example, at most 0.5 mm from a rest position in all directions.

26. Exhaust system according to any of Claims 1 to 25, **characterized in that** the exhaust (12, 212) has a catalytic converter (14, 219) and that the or at least one deformable line member (16, 18, 21, 221, 224), the or at least one pipe (17, 20, 22, 24, 223, 225, 227) having said wall thickness and the or each housing (45, 65) of a silencer (19, 23, 222, 226) with a casing (47, 67) having said wall thickness are arranged downstream of the catalytic converter (14, 219).

27. Motor vehicle comprising a vehicle body (2, 202), an internal combustion engine (6, 206) and an exhaust system (11, 211) according to any of Claims 1 to 26,
**characterized in that** the exhaust (12, 212) of the exhaust system (11, 211) is connected to the internal combustion engine (6, 206) and that the or each hosing (45, 65, 235, 255) is held on the vehicle body (2, 202) by the retaining means (27, 241).

## Revendications

1. Dispositif d'échappement pour un véhicule automobile (1, 201) comportant un corps de véhicule (2, 202) et un moteur à combustion interne (6, 206), le véhicule automobile (1, 201) définissant une direction longitudinale, avec un échappement (12, 212) pouvant être raccordé au moteur à combustion interne (6, 206) et avec des moyens de maintien (27, 241) pour la fixation de l'échappement (12, 212) au corps du véhicule (2, 202), l'échappement (12, 212) comportant au moins un élément de conduite déformable (16, 18, 21, 216, 218, 221, 224), au moins un tube (17, 20, 22 24, 217, 220, 223, 225, 227) disposé en aval de celui-ci et au moins un silencieux (19, 23, 222, 226, 251) avec un boîtier (45, 65, 255) avec deux extrémités, disposé en aval de l'élément de conduite déformable (16, 18, 21, 216, 218, 221, 224), **caractérisé en ce que** le respectivement au moins un tube (17, 20, 22, 24, 217, 220, 223, 225, 227) disposé en aval de l'élément de conduite déformable (16, 18, 21, 216, 218, 221, 224), a pour l'essentiel une épaisseur de paroi s'élevant à 1 mm au maximum, **en ce qu'**une enveloppe métallique (47, 67, 257) du boîtier (45, 65, 255) d'un silencieux (19, 23, 222, 226, 251) disposé en aval de l'élément respectivement de chaque élément de conduite cité (16, 18, 21, 216, 218, 221, 224) a pour l'essentiel une épaisseur de paroi s'élevant à 1 mm au maximum et **en ce que** les moyens de maintien (27, 241) pour le respectivement pour chaque boîtier cité (45, 65, 255) comportent deux supports (28, 29, 30, 31, 121, 131, 141, 151, 161, 243, 244, 245, 291) dont chacun est disposé à proximité d'une des deux extrémités du boîtier (45, 65, 235, 255) et comporte deux organes de liaison (87, 97, 101, 111, 125, 135, 145, 155) situés à distance l'un de l'autre et comportant chacun un corps en caoutchouc (102, 112).

2. Dispositif d'échappement selon la revendication 1, **caractérisé en ce que** l'épaisseur de paroi citée d'au moins un tube (17, 20, 22, 24, 217, 220, 223, 225, 227), s'élève pour l'essentiel au maximum à 0,8 mm.

3. Dispositif d'échappement selon la revendication 1 ou 2, **caractérisé en ce que** l'échappement (12, 212) comporte le long de l'écoulement du gaz d'échappement un premier silencieux (19, 222, 251), un deuxième silencieux (23, 226) et au moins un tube (20, 22, 223, 225) disposé entre les deux silencieux (19, 23, 222, 226, 251) et qu'au moins un tube (15, 17) disposé en aval du premier silencieux (19, 222, 251) et que le respectivement chaque tube (20, 22, 223, 225) disposé entre les deux silencieux (19, 23, 222, 226, 251) a une épaisseur qui est au maximum égale à la valeur citée.

4. Dispositif d'échappement selon l'une des revendications 1 à 3, **caractérisé en ce que** l'épaisseur de l'enveloppe métallique (47, 67, 257) du respectivement de chaque boîtier (45, 65, 255) cité d'un silencieux (19, 23, 222, 226, 251) s'élève pour l'essentiel au maximum à 0,8 mm.

5. Dispositif d'échappement selon l'une des revendications 1 à 4, **caractérisé en ce qu'**au moins un matériau absorbant les sons et isolant de la chaleur est présent entre l'enveloppe (47, 67,257) et un espace interne creux (60, 80, 270) dans un boîtier (45, 65, 235, 255) faisant partie d'un silencieux (19, 23, 222, 226, 251) et que ce matériau (59, 79, 269) est épais d'au moins 10 mm.

6. Dispositif d'échappement selon la revendication 4 ou 5, **caractérisé en ce que** le boîtier (45, 65, 255) du respectivement au moins un silencieux (19, 23, 222, 226, 251) comporte deux parois terminales (48, 49, 68, 69, 258, 259) dont les épaisseurs s'élèvent pour l'essentiel au maximum à 1 mm et de préférence au maximum à 0,8 mm.

7. Dispositif d'échappement selon la revendication 6, **caractérisé en ce que** le boîtier (45, 65, 235, 255) du respectivement d'au moins un silencieux (19, 23, 222, 226, 251) contient entre les parois terminales (48, 49, 68, 69, 258, 259) et l'espace interne creux (60, 80, 270) du matériau absorbant les sons et isolant de la chaleur (57, 58, 77, 78) qui est épais d'au moins 10 mm et de préférence d'au moins 20 mm.

8. Dispositif d'échappement selon la revendication 5 et 7, **caractérisé en ce que** le matériau absorbant les sons et isolant de la chaleur (57, 58, 59, 77, 78, 79, 267, 268, 269) est composé de fibres minérales, par exemple, de la laine de basalte et / ou de la laine de roche et / ou de la laine de verre et que le boîtier (45, 65, 255) du respectivement d'au moins un silencieux (19, 23, 222, 226, 251) contient une enveloppe interne (55, 75, 265) au moins perméable par endroits aux gaz et deux parois intermédiaires (50, 51, 70, 71, 260, 261) au moins perméables par endroits aux gaz et que l'enveloppe interne (55, 75, 265) et les parois intermédiaires (50, 51, 70, 71, 260, 261) délimitent ensemble avec l'enveloppe (57, 67, 257) et les parois terminales (48, 49, 68, 69, 258, 259) des espaces intermédiaires dans lesquels est disposé le matériau absorbant les sons et isolant de la chaleur (57, 58, 77, 78, 79, 267, 268, 269) l'enveloppe interne (55, 75, 265) et les parois intermédiaires (50, 51, 70, 71, 260, 261) ayant des épaisseurs de paroi qui s'élèvent pour l'essentiel au maximum à 1 mm et par exemple pour l'essentiel au maximum à 0,8 mm.

9. Dispositif d'échappement selon l'une des revendications 1 à 8, **caractérisé en ce que** l'échappement (12, 212) comporte au moins un boîtier (235, 255) contenant des moyens de catalyse (275), disposé en aval de l'élément de conduite cité (216, 218), lequel boîtier à une enveloppe (275) avec une épaisseur de paroi qui s'élève pour l'essentiel au maximum à 1 mm et de préférence pour l'essentiel au maximum à 0,8 mm.

10. Dispositif d'échappement selon l'une des revendications 1 à 9, **caractérisé en ce que** les moyens de maintien (27, 241) pour le respectivement pour chaque boîtier (45, 65, 235, 255) comportent au moins un support (28, 29, 30, 31, 121, 131, 141, 151, 161, 243, 244, 245, 291) qui est directement relié au boîtier (45, 65, 235, 255).

11. Dispositif d'échappement selon l'une des revendications 1 à 10, **caractérisé en ce que** l'échappement (12, 212) comprend deux éléments de conduite déformables (16, 18, 216, 218) qui sont disposés en aval du respectivement du premier boîtier cité (45, 235) et qui sont reliés l'un à l'autre par un tube (17, 217) dont l'épaisseur de paroi pour l'essentiel est au maximum égale à l'épaisseur maximale citée d'au moins un tube (17, 20, 22, 24, 217, 220, 223, 225, 227).

12. Dispositif d'échappement selon l'une des revendications 1 à 11, **caractérisé en ce que** le corps en caoutchouc (102, 112) de chaque organe de liaison (87, 97, 101, 111, 125, 135, 145, 155) est composé d'un caoutchouc synthétique et / ou naturel et que les organes de liaison (87, 97, 101, 111, 125, 135, 145, 155, 165) correspondants au respectivement au même boîtier (45, 65, 265) définissent dans une projection sur un plan où se trouve le véhicule automobile (1, 201) un carré.

13. Dispositif d'échappement selon l'une des revendications 1 à 12, **caractérisé en ce que** le respectivement chaque boîtier (45, 65, 235, 255) définit un axe (46, 66, 256) et que les deux organes de liaison (87, 97, 101, 111, 125, 135, 145, 155) appartenant au même support (28, 29, 30, 31, 121, 131, 141, 151, 161, 243, 244, 245, 291) se tiennent à distance l'un de l'autre perpendiculairement à l'axe (46, 66, 256).

14. Dispositif d'échappement selon l'une des revendications 1 à 13, **caractérisé en ce que** chaque organe de liaison (87, 97, 101, 111, 125, 135, 145, 155, 165) comporte des moyens de liaison (87b, 104, 114) connectés au boîtier (45, 65, 235, 255) et des moyens de liaison déterminés (87c, 104, 115) pour la connexion avec le corps de véhicule (2, 202).

15. Dispositif d'échappement selon la revendication 14, **caractérisé en ce que** le corps en caoutchouc (102, 112) entre les moyens de liaison (87b, 87c, 104, 114, 115) est pour l'essentiel plein en coupe transversale.

16. Dispositif d'échappement selon l'une des revendications 1 à 15, **caractérisé en ce que** le corps en caoutchouc (102, 112) de chaque organe de liaison (87, 97, 101, 111, 125, 135, 145, 155) est pour l'essentiel rotationnellement symétrique à un axe et / ou forme pour l'essentiel un polygone régulier en coupe transversale.

17. Dispositif d'échappement selon l'une des revendications 1 à 16, **caractérisé en ce que** le corps en caoutchouc (102, 112) de chaque organe de liaison (87, 97, 101, 111, 125, 135, 145, 155) comporte deux surfaces de soutien éloignées l'une de l'autre et qu'une dimension axiale de la section principale (87a) ou du corps (102, 112) mesurée de surface de soutien à surface de soutien est de 50 à 150 % du diamètre maximal du corps en caoutchouc (102, 112).

18. Dispositif d'échappement selon l'une des revendications 1 à 17, **caractérisé en ce que** l'élément de conduite déformable disposé en aval du respectivement du premier boîtier (45, 235, 265) dans la direction d'écoulement du gaz d'échappement le long de l'échappement (12, 212) ou que les éléments de conduite déformables (16, 18, 216, 218) disposés en aval du respectivement du premier boîtier (45, 235, 265) dans la direction d'écoulement du gaz d'échappement le long de l'échappement (12, 212), est/sont réalisés afin de compenser les modifications de longueur d'au moins jusqu'à 5 mm et par exemple d'au moins jusqu'à 10 mm, d'au moins une partie fixe de l'échappement (12, 212) située en aval du respectivement du premier boîtier (45, 235, 265).

19. Dispositif d'échappement selon l'une des revendications 1 à 18, **caractérisé en ce que** l'échappement (12) comporte au moins deux silencieux (19, 23) et entre ceux-ci au moins un tube (20, 22) et au moins un élément de conduite déformable (21) qui a une longueur variable d'au moins 5 mm et par exemple d'au moins 10 mm.

20. Dispositif d'échappement selon l'une des revendications 1 à 19, **caractérisé en ce que** le respectivement chaque élément de conduite déformable (16, 18, 21, 216, 218, 221, 224) comporte un soufflet ondulé (33) et découple du moteur à explosion, en matière de vibrations (6, 206) toute la partie de l'échappement (12, 122) disposée en aval de lui.

21. Dispositif d'échappement selon l'une des revendications 1 à 20, **caractérisé en ce que** les moyens de maintien (27, 241) sont formés pour fixer au corps du véhicule (2, 202) le respectivement au moins le premier boîtier suivant (45, 235, 255) le long de l'échappement (12, 212) dans la direction d'écoulement du gaz d'échappement sur le premier élément de conduite déformable, (16, 216) de telle sorte que ce boîtier (45, 235) s'allonge au maximum de 5 mm, sous l'influence d'une accélération constante de 10 m/s² ou d'une force constante de 100 N dans n'importe laquelle d'une direction perpendiculaire à la direction longitudinale du véhicule automobile (1, 201).

22. Dispositif d'échappement selon l'une des revendications 1 à 21, **caractérisé en ce que** les moyens de maintien (27, 241) sont formés pour fixer au corps du véhicule (2, 202) le respectivement au moins le premier boîtier suivant (45, 235, 255) le long de l'échappement dans la direction d'écoulement du gaz d'échappement sur le premier élément de conduite cité (16, 216) de telle sorte que ce boîtier (45, 235, 255) s'allonge au maximum de 5 mm, sous l'influence d'une accélération constante de 10 m/s² ou d'une force constante de 100 N dans toutes les quelconques directions.

23. Dispositif d'échappement selon l'une des revendications 1 à 22, **caractérisé en ce que** les moyens de maintien (27, 241) sont formés pour fixer au corps du véhicule (2, 202) le respectivement au moins le premier boîtier suivant (45, 235, 255) le long de l'échappement (12, 212) dans la direction d'écoulement du gaz d'échappement sur le premier élément de conduite cité (16, 216) de telle sorte que ce boîtier (45, 235, 255) s'allonge au maximum de 2 mm, sous l'influence d'une accélération constante de 10 m/s² ou d'une force constante de 100 N dans toutes les quelconques directions.

24. Dispositif d'échappement selon l'une des revendications 1 à 23, **caractérisé en ce que** les moyens de maintien (27, 241) sont formés pour fixer au corps du véhicule (2, 202) le respectivement au moins le premier boîtier suivant (45, 235, 255) le long de l'échappement (12, 212) dans la direction d'écoulement du gaz d'échappement sur le premier élément de conduite cité (16, 216) de telle sorte que ce boîtier (45, 235, 255), dans l'état séparé des parties restantes de l'échappement (12, 212) s'allonge sous l'influence d'une accélération constante ou d'une force constante au maximum de 5 mm et de préférence au maximum de 2 mm avec la valeur citée dans une quelconque direction.

25. Dispositif d'échappement selon l'une des revendications 1 à 24, **caractérisé en ce que** les moyens de maintien (27, 241) sont formés pour fixer au corps du véhicule (2, 202) le boîtier (45, 65, 255) respectivement au moins un silencieux (19, 23, 122) de telle sorte que ce boîtier (45, 235, 255), lors d'un fonctionnement normal du véhicule (1, 201) s'allonge, dans toutes les directions, au maximum de 2 mm et par exemple au maximum de 0,5 mm depuis une position de repos.

26. Dispositif d'échappement selon l'une des revendications 1 à 25, **caractérisé en ce que** l'échappement (12, 212) comporte un catalyseur (14, 219) de telle sorte que le respectivement au moins un élément de conduite déformable (16, 18, 21, 221, 224), le respectivement au moins un tube (17, 20, 22, 24, 223, 225, 227) avec l'épaisseur de paroi citée et le respectivement chaque boîtier (45, 65) d'un silencieux (19, 23, 222, 226) avec une enveloppe (47, 67) comportant l'épaisseur de paroi citée sont disposés en aval du catalyseur (14, 219).

27. Véhicule automobile avec un corps de véhicule automobile ((2, 202), un moteur à combustion interne (6, 206) et un dispositif d'échappement (11, 211) selon l'une des revendications 1 à 26, **caractérisé en ce que** l'échappement (12, 212) du dispositif d'échappement (11, 211) est relié au moteur à combustion interne (6, 206) et que le respectivement chaque boîtier (45, 65, 235, 255) est maintenu au corps de véhicule (2, 202) par les moyens de maintien (27, 247).
